(19) Europäisches Patentamt
European Patent Office
Office européen des brevets

(11) **EP 3 390 785 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **16836228.3**

(22) Anmeldetag: **19.12.2016**

(51) Int Cl.:
**F01K 27/00** *(2006.01)*

(86) Internationale Anmeldenummer:
**PCT/DE2016/100595**

(87) Internationale Veröffentlichungsnummer:
**WO 2017/101914 (22.06.2017 Gazette 2017/25)**

(54) **GLEICHDRUCKMEHRKAMMERBEHÄLTER, THERMODYNAMISCHER ENERGIEWANDLER UND BETRIEBSVERFAHREN**

CONSTANT-PRESSURE MULTI-COMPARTMENT VESSEL, THERMODYNAMIC ENERGY CONVERTER AND OPERATING METHOD

RÉSERVOIR À PLUSIEURS COMPARTIMENTS À PRESSION CONSTANTE, CONVERTISSEUR D'ÉNERGIE THERMODYNAMIQUE ET PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2015 DE 102015016348**

(43) Veröffentlichungstag der Anmeldung:
**24.10.2018 Patentblatt 2018/43**

(73) Patentinhaber: **Thermolectric Industrial Solutions GmbH**
**1219 Dresden (DE)**

(72) Erfinder:
• **EBERT, Christoph**
**01324 Dresden (DE)**

• **LOOS, Alexander**
**01705 Freital (DE)**
• **SCHULZ-COPPI, Eilard**
**01259 Dresden (DE)**

(74) Vertreter: **Gottfried, Hans-Peter**
**Patentanwalt**
**Messering 8f**
**01067 Dresden (DE)**

(56) Entgegenhaltungen:
**AT-A4- 506 796         DE-A1-102010 005 232**
**US-A1- 2006 059 912**

**Beschreibung**

Die Erfindung betrifft einen Gleichdruckmehr-kammerbehälter für einen thermodynamischen Energie-wandler, den thermodynamischen Energiewandler und ein Verfahren zum Betrieb des thermodynamischen Energiewandlers. Der Energiewandler dient zur Umwandlung thermischer Energie in mechanische Energie bzw. mechanischer Energie in thermische Energie. Ein gasförmiges Arbeitsmedium wird in einem thermodynamischen Kreisprozess durch Zufuhr höher temperierter Wärmeenergie von außen erhitzt und in zyklischer Folge durch Abfuhr mit niedriger temperierter Wärmeenergie von außen gekühlt. Die mechanische Energie wird durch Volumenarbeit erzeugt. Nach einem einmaligen Ablauf des Kreisprozesses ist der Ausgangszustand erreicht. Als Gleichdruckmehrkammerbehälter wird ein Volumenelement zum Einschließen eines Arbeitsmediums bezeichnet, das mehrere Kammern umfasst, zwischen denen sich der Druck des Arbeitsmediums stets ausgleicht.

Entscheidend für einen Kreisprozess ist, dass das Arbeitsmittel nach einmaligem Durchlauf dieses Kreisprozesses denselben Zustand einnimmt, welches das Arbeitsmittel zu Beginn des Kreisprozesses hatte. Wird als Arbeitsmedium ein Gas verwendet, so ist dessen Zustand definiert durch die drei Zustandsgrößen p (Druck), V (Volumen) und T (Temperatur). Diese stehen unter Annahme eines idealen Gases im Zusammenhang:

$$\frac{p \times V}{T} = \text{konst.}$$

Wird diesem thermodynamischen Grundprinzip gefolgt und dieses der Konstruktion einer Arbeits- bzw. Wärmekraftmaschine zugrunde gelegt, bedarf es lediglich eines Bauteils, welches die Zustandsgrößen p, V, T einzeln oder kombiniert wahlweise konstant halten bzw. verändern kann. Mit diesem Bauteil wird es dann möglich, einzelne Zustandsänderungen eines Arbeitsmittels (z. B. die isochore, die isotherme, die isobare, die adiabatische oder eine polytrope Zustandsänderung) optimal realisieren zu können. Somit wird es weiterfolgend möglich, jeden beliebigen Kreisprozess allein durch eine Folge unterschiedlicher Zustandsänderungen des Arbeitsmittels mit diesem einen Bauteil technisch zu realisieren.

Der Kreisprozess kann in einer Wärmekraftmaschine ablaufen, die mit Zylindern und Kolben ausgerüstet ist und die Volumenänderungsarbeit über sich bewegende mechanische Kolben, dem Pleuel und der Kurbelwelle, in Form einer Drehbewegung in mechanische Energie umgewandelt wird. Eine solche Wärmekraftmaschine beschreibt die Druckschrift US 8 938 942 B2. Eine Wärmekraftmaschine mit geschlossenem Kreislauf und externer Verbrennung ist dort vorgesehen. Sie weist eine Gaskammer, einen Heizer und einen Kühler auf, die abgeschlossen sind. Strömungswege verbinden die Gaskammer und jeweils die Einlass- und Auslassseiten des Heizers sowie des Kühlers, wobei diese durch Ein-Aus-Ventile geöffnet oder geschlossen werden können. Es ist weiterhin ein Mittel zum Bewegen eines Arbeitsgases vorgesehen. Das Umschalten der Zuführung des Arbeitsgases zwischen dem Heizer und dem Kühler erfolgt durch Ein-Aus-Ventile. Es ist eine Arbeitsvorrichtung, insbesondere ein Zylinder mit einem Kolben und einem Kurbeltrieb, vorgesehen, die angetrieben wird, wenn sich das Arbeitsgas zusammenzieht oder ausdehnt. Das Volumen des Heizers oder des Kühlers wirkt sich nicht auf die Effizienz des Motors aus, und der Motor arbeitet unter verschiedenen Bedingungen.

Derartige bekannte Systeme zur Umwandlung thermischer Energie in mechanische Energie bzw. mechanischer Energie in thermische Energie folgen jeweils für sich einem einzelnen, festgelegten Kreisprozess. Der Nachteil dessen ist, dass in den jeweiligen Anwendungsfeldern der Bewegungsspielraum der Konstruktion dahingehend eingeschränkt ist. Vor allem aber ergeben sich Einschränkungen durch die starren Bewegungsvorgaben des Kurbeltriebs.

Ein weiterer Energiewandler zur Umwandlung thermischer in mechanische Energie ist aus der Druckschrift EP 2 775 109 A1 bekannt. Dabei wird gleichfalls der Effekt genutzt, dass mit Hilfe einer einfachen Zustandsänderung aus einer bestimmten Menge an gasförmigem Arbeitsmedium nur einmalig Arbeit gewonnen werden kann. Um die Arbeitsleistung wiederholen zu können, muss das Arbeitsmittel in den Anfangszustand zurückgeführt werden. Durch einfache Umkehrung der Zustandsänderung wird bei völliger Reversibilität in beiden Fällen die gewonnene Arbeit gerade wieder aufgebraucht. Wenn Arbeit gewonnen werden soll, muss der Anfangszustand auf einem anderen Wege erreicht werden. Der Zustand verändert sich in diesem Fall zyklisch, d. h. das Arbeitsmittel durchläuft einen Kreisprozess. Nur dabei kann Wärme laufend in Arbeit umgewandelt werden. Das gasförmige Arbeitsmedium befindet sich in einem nach außen hin abgeschlossenen Volumen.

Die teilweise mit Hydrauliköl als Verdrängerfluid gefüllten beiden Druckbehälter sind über einen Rohrleitungsverbund mit Ventilen hydraulisch gekoppelt. Wenn sich durch Volumenarbeit des Arbeitsmediums in dem ersten Druckbehälter eine Deckelfläche des Verdrängerfluids in eine Richtung, z. B. nach unten, und das Verdrängerfluid von dem ersten zu dem zweiten Druckbehälter bewegt, bewegt sich die Deckelfläche des Verdrängerfluids des zweiten, zu dem ersten komplementären Druckbehälters in die Gegenrichtung. Im Rohrleitungsverbund ist zwischen den zwei Druckbehältern eine kraftumformende Einheit, z. B. ein Hydraulikmotor oder ein Linearantrieb, eingebunden, worüber mechanische Energie nutzbar ist. Durch die zwei miteinander hydraulisch verbundenen Druckbehälter erfolgt gleichzeitig der Ablauf zweier Kreisprozesse, jedoch mit taktverschobener Folge der Zustandsänderungen.

Die geometrische Einengung des Prozessablaufes durch die Bewegungsvorgaben des Kurbeltriebs wird überwunden, da anstelle des mechanischen Kolbens im Zylinder die Kraftübertragung der Volumenarbeit über eine hydraulische Flüssigkeit erfolgt, die quasi inkompressibel ist, wie z. B. Hydrauliköl. Das Hydrauliköl übernimmt zugleich über eine Rohrleitung die Kraftübertragung, z. B. auf einen Hydraulikmotor, der die mechanische Energie in eine Drehbewegung überführt und damit nutzbar macht. Konstruktionsbedingt durch die Regelung mit Hilfe der Ventile und der Umdrehungszahl der im Stand der Technik vorgeschlagenen Rohrlüfter sind vielfältige polytrope Kompressionsverläufe und Entspannungsverläufe des Arbeitsmediums möglich. Dies kann allerdings nur in den Grenzen von deren Regelung und der Volumengrenze des Raumes im Druckbehälter erfolgen. Weitere Energiewandler sind aus den Druckschriften US2006/0059912, AT506796 und DE102010005232 bekannt. Aufgabe der vorliegenden Erfindung ist es, durch ein neuartiges Verfahren und eine neuartige Gestaltung des Energiewandlers und seiner Komponenten die Leistungsfähigkeit des Energiewandlers zu erhöhen. Die Aufgabe wird durch die Vorrichtung des Anspruchs 1 und das Verfahren des Anspruchs 13 gelöst.

Die Aufgabe wird insbesondere gelöst durch einen thermodynamischen Energiewandler, dessen Kernbaustein ein Volumenelement zum Einschließen eines Arbeitsmediums innerhalb eines in seiner Größe veränderlichen Volumens, nachfolgend als Gleichdruckmehrkammerbehälter bezeichnet, zur Aufnahme eines gasförmigen Arbeitsmediums darstellt. Der Gleichdruckmehrkammerbehälter weist eine das innere Volumen in Wärmeübertragerkammern sowie eine Arbeitskammer unterteilende Wandung auf, wobei innerhalb der Arbeitskammer ein die Arbeitskammer in einen mit dem Arbeitsmedium beaufschlagten Arbeitsraum und einen mit einem Verdrängerfluid beaufschlagten Kraftübertragungsraum unterteilendes Trennelement ausgebildet ist. Die Wärmeübertragerkammern und der Arbeitsraum sind untereinander fluidtechnisch derart miteinander verbunden ausgebildet, dass das Arbeitsmedium innerhalb des Volumenelements den gleichen Druck aufweist sowie jede Wärmeübertragerkammer über einen Einlass und einen getrennt vom Einlass ausgebildeten Auslass mit dem Arbeitsraum verbunden ist.

Die Arbeitskammer bildet in dem mit dem Arbeitsmedium beaufschlagten Bereich einen Arbeitsraum, in welchem während des Betriebes der vorgesehene thermodynamische Kreisprozess abläuft. Die Arbeitskammer ist mit der Hochtemperaturwärmeübertragerkammer sowie mit der Niedertemperaturwärmeübertragerkammer zumindest über jeweils einen steuerbaren Arbeitsmediumdurchlass verbunden.

Erfindungsgemäß ist jeweils ein Einlass oder ein Auslass als Verbindung zwischen den Wärmeübertragerkammern und dem Arbeitsraum mit mindestens einer Vorrichtung zum Beeinflussen der Durchströmung der Wärmeübertragerkammern mit Arbeitsmedium derart ausgebildet, dass eine Durchströmung mindestens einer der Wärmeübertragerkammern verhindert sowie eine Durchströmung mindestens einer anderen Wärmeübertragerkammer gefördert wird.

Der Fluidstrom durch die Arbeitsmediumdurchlässe wird somit über die Vorrichtung zum Beeinflussen der Durchströmung der Wärmeübertragerkammern mit Arbeitsmedium, auch als Schließvorrichtung bezeichnet, gesteuert. Beide Wärmeübertragerkammern sind bei einer bevorzugten Ausgestaltung der Erfindung durch eine gemeinsame Zirkulationsleitung mit ihrem jeweiligen Arbeitsraum in der Weise verbunden, dass das Arbeitsmedium zwischen jeweils einer der Wärmeübertragerkammern mit geöffnetem Arbeitsmediumdurchlass und der Arbeitskammer zirkulieren kann. Auch getrennte Zirkulationsleitungen sind von der Erfindung umfasst, wären aber mit einem höheren apparativen Aufwand verbunden. Es sei denn, eine bestimmte Ausführungsform erfordert dies.

Ein Beispiel für eine solche Ausführungsform ist eine rohrförmige Ausbildung der Arbeitskammer, bei der im Inneren des Rohrs ein schlauchartiges, flexibles Trennelement eingesetzt und an den Enden so mit dem Rohr verbunden ist, dass ein dichter Abschluss entsteht. Damit bildet sich zwischen dem Rohr und dem Trennelement der Kraftübertragungsraum aus, während innerhalb des schlauchförmigen Trennelements der Arbeitsraum ausgebildet ist.

Außerhalb der rohrförmigen Arbeitskammer sind die Wärmeübertragerkammern angeordnet, beispielsweise als separate Kammern, die genügend Raum für die Aufnahme des Wärmeübertragers bieten und sich bevorzugt in Längsrichtung zur rohrförmigen Arbeitskammer erstrecken. Alternativ hierzu ist bei einer besonders platzsparenden Ausführung auch ein Hüllrohr zur Aufnahme der Wärmeübertrager vorgesehen. Dazu ist das Hüllrohr in zwei Halbschalen getrennt, so dass sich separate Kammern herausbilden. Im Interesse einer ausreichenden Leistung des Wärmeübertragers ist dieser bevorzugt als mehrere Wärmeübertrager kleineren Durchmessers ausgeführt, so dass diese in den engen Raum zwischen dem Hüllrohr und der rohrförmigen Arbeitskammer parallel zueinander verlaufend montiert werden können.

Zwischen dem Arbeitsraum und den Wärmeübertragerkammern besteht an den Stirnseiten eine Verbindung, die ein Durchströmen mit dem Arbeitsmedium ermöglicht. Dabei ist eine Schließvorrichtung vorgesehen, optional auch ein zusätzlicher Lüfter, um eine gezielte Steuerung der Durchströmung mit dem Arbeitsmedium zu ermöglichen.

Der thermodynamische Energiewandler ist mit zumindest einem ersten und einem zweiten Gleichdruckmehrkammerbehälter ausgestattet. Jeder der Gleichdruckmehrkammerbehälter ist in dem Bereich der Arbeitskammer, in dem das Verdrängerfluid anliegt und ein Kraftübertragungsraum gebildet wird, über wenigstens eine Hauptleitung für das Verdrängerfluid mit einer Fluidenergieumformeranordnung zur Umformung kinetischer Strömungsenergie des Verdrängerfluids (nachfolgend nur kurz Fluidenergie genannt) in mechanische Energie an unterschiedlichen Eingängen der Fluidenergieumformeranordnung verbunden. Bei einer Druckdifferenz zwischen dem ersten und dem zweiten Gleichdruckmehrkammerbehälter strömt das Verdrängerfluid von dem Kraftübertragungsraum mit dem höheren Druck zu dem Kraftübertragungsraum mit dem niedrigeren Druck über eine Fluidenergieumformeranordnung.

Nach einer vorteilhaften Ausgestaltung der Erfindung ist zur Steuerung der Arbeitsmediumdurchlässe ein Drehschieber vorgesehen, der den Strömungsquerschnitt der Arbeitsmediumdurchlässe zumindest so stark vermindert, dass die Strömung behindert wird.

Ziel des thermodynamischen Energiewandlers ist es, bereitstehende Wärmeenergie in kinetische Energie bzw. im umgekehrten Prozess kinetische Energie in thermische Energie (Wärme oder Kälte) umzuwandeln. Zur Umwandlung in kinetische Energie wird die Wärmeenergie genutzt, um ein Arbeitsmedium zu erwärmen. Diese Erwärmung führt bei einem als ideales Gas angenommenen Arbeitsmedium zu einer Erhöhung des Druckes und/oder des eingenommenen Volumens des Arbeitsmediums unter der Voraussetzung, dass die Masse des Arbeitsmediums konstant bleibt. Eine Volumenänderung führt dann zu einer Teilchenbewegung und somit zur Umwandlung in Bewegungsenergie.

Der erfindungsgemäße thermodynamische Energiewandler ist aus mindestens zwei Gleichdruckmehrkammerbehältern ausgebildet, welche im Bereich eines Kraftübertragungsraums über wenigstens eine Hauptleitung hydraulisch miteinander verbunden sind. In der Hauptleitung, die ein Verdrängerfluid führt, ist eine Fluidenergieumformeranordnung, umfassend einen Fluidenergieumformer und eine Ventilanordnung, vorgesehen. Mit der Hauptleitung können auch drei, vier oder mehr Gleichdruckmehrkammerbehälter verbunden werden, so dass bei einem Druckgefälle des Verdrängerfluids eine Strömung über den Fluidenergieumformer erfolgt und die Strömungsenergie in wenigstens eine andere Energieform umwandelbar ist.

Ein solcher Gleichdruckmehrkammerbehälter dient auch als ein Temperierbehälter zum Temperieren eines Arbeitsmediums. Er ist als ein Gleichdruckmehrkammerbehälter mit mindestens drei zueinander offenen Kammern aufgebaut, sodass eine Temperatur- oder Volumenänderung des Arbeitsmediums in einer Kammer immer einen Massentransport zwischen den Kammern bewirkt, die Druckdifferenz nach dem Massentransport zwischen den Kammern aber stets null ist.

In mindestens einer der Kammern des Behälters, die als Hochtemperaturwärmeübertragerkammer ausgeführt ist, ist ein Hochtemperaturwärmeübertrager angeordnet, in mindestens einer zweiten Kammer ist ein Niedertemperaturwärmeübertrager platziert, so dass eine Niedertemperaturwärmeübertragerkammer gebildet wird. Mindestens eine dritte Kammer ist zumindest teilweise mit einem Verdrängerfluid gefüllt. Diese dritte Kammer ist als eine Arbeitskammer ausgebildet. Der darin ebenfalls vorgesehene, mit Arbeitsmedium gefüllte Bereich wird als Arbeitsraum definiert. Der in der Arbeitskammer mit Verdrängerfluid gefüllte Bereich wird als Kraftübertragungsraum definiert.

In den meisten Betriebsfällen ist die dritte Kammer, die Arbeitskammer, nur teilweise mit dem Verdrängerfluid gefüllt. Prinzipiell ist es auch möglich, dass der obere Totpunkt bei einem Arbeitsraumvolumen $V_{AR}=0$ erreicht wird, dann wirkt bei der Expansion nur das Volumen der Wärmeübertragerkammern. Der thermische und damit der mechanische Wirkungsgrad sind dabei deutlich geringer als bei $V_{AR} > 0$.

Jede der Kammern, die als Hochtemperaturwärmeübertragerkammer oder als Niedertemperaturwärmeübertragerkammer ausgeführt ist, hat zwei Öffnungen, auch als Arbeitsmediumdurchlass bezeichnet, zu der Kammer, von der ein Teil als Arbeitsraum definiert ist, aber nur eine davon, entweder die Hochtemperaturwärmeübertragerkammer oder die Niedertemperaturwärmeübertragerkammer, wird durch eine Schließvorrichtung bei Bedarf gesperrt oder der Strömungswiderstand erhöht. Dieser Vorgang wird auch als Abschatten bezeichnet, wobei die Schließvorrichtung die Öffnung nicht druckdicht schließen muss, damit Temperaturunterschiede in den Kammern gehalten werden können. Die Verbindung zwischen den Wärmeübertragerkammern und der Arbeitskammer ist demnach mit einer Schließvorrichtung versehen, die es ermöglicht, die Durchströmung mindestens einer der Wärmeübertragerkammern derart durch Vergrößerung des Strömungswiderstandes zu behindern, dass das Arbeitsmedium bevorzugt durch die andere Wärmeübertragerkammer strömt. Das kann durch eine Schließvorrichtung, die als Blende, Drehschieber oder eine andere Drosselvorrichtung ausgeführt ist, erfolgen. Somit sind die Kammern zueinander immer offen, aber ein Durchströmen der Kammern erfolgt nur dann, wenn beide Öffnungen offen bzw. nicht abgeschattet sind.

In einem speziellen Betriebsfall kann auch die Durchströmung beider Wärmeübertragerkammern derart durch Vergrößerung des Strömungswiderstandes in der oder den Öffnungen behindert sein, dass eine Expansion oder eine Kompression des gasförmigen Arbeitsmediums adiabat und nicht isotherm erfolgt. In dem Fall kann das Arbeitsmedium über eine Zirkulationsleitung in die oder aus den Wärmeübertragerkammern gefördert werden, ohne dass das Gas durch die Hochtemperaturwärmeübertragerkammer oder die Niedertemperaturwärmeübertragerkammer zirkuliert.

Im häufigsten Betriebsfall wird dem Arbeitsmedium in der Hochtemperaturwärmeübertragerkammer ständig Wärme zugeführt und vom Arbeitsmedium in der Niedertemperaturwärmeübertragerkammer ständig Wärme abgeführt. Das Arbeitsmedium in der Hochtemperaturwärmeübertragerkammer wird somit ständig erwärmt bzw. ist die Temperatur des Arbeitsmediums konstant hoch und das Arbeitsmedium in der Niedertemperaturwärmeübertragerkammer wird stets gekühlt bzw. ist die Temperatur des Arbeitsmediums konstant niedrig. Das Arbeitsmedium im Arbeitsraum weist im stationären Zustand eine mittlere Temperatur entsprechend dem Verhältnis von Kühl- und Heizleistung in den beiden anderen Kammern auf.

Die gezielte Durchströmung einer der Wärmeübertragerkammern und der dazu offenen ersten Arbeitskammer bei gleichzeitiger Behinderung der Durchströmung der zweiten Wärmeübertragerkammer führt dazu, dass das Arbeitsmedium im Arbeitsraum auf Grund des deutlich höheren Wärmeübergangs bei erzwungener Konvektion die Temperatur der durchströmten Wärmeübertragerkammer annimmt. Der Druck im gesamten Gleichdruckmehrkammerbehälter sinkt bei gleichbleibendem Volumen bei Abkühlung oder steigt bei Erwärmung. Die gezielte Durchströmung wird erreicht, indem ein Strömungspfad gezielt eingestellt wird, beispielsweise durch Sperren oder Öffnen der Zugänge, der Öffnungen oder Arbeitsmediumdurchlässe zum Arbeitsraum. Weiterhin kann eine in den Strömungspfad eingefügte Strömungseinrichtung, z. B. ein Lüfter oder ein Zirkulationsverdichter, dafür sorgen, dass die Durchströmung mit erhöhtem Volumenstrom des Arbeitsmediums aktiv forciert erfolgt. Das erfindungsgemäße Verfahren läuft auch ohne eine Strömungseinrichtung ab, dann jedoch bei sehr geringem Wirkungsgrad, da nur durch das einströmende heiße Gas mit geringer Dichte eine Zirkulation in begrenztem Umfang hervorgerufen wird.

Bei einer beispielhaften Ausgangssituation liegt in allen drei Kammern (Hochtemperaturwärmeübertragerkammer, Niedertemperaturwärmeübertragerkammer, Arbeitsraum) eines Gleichdruckmehrkammerbehälters kaltes Gas als Arbeitsmedium vor. Bei Aktivierung der erfindungsgemäßen Vorrichtung wird das Gas in der Hochtemperaturwärmeübertragerkammer erwärmt. Da sie offen zu den anderen Kammern ist, strömt ein Teil des warmen Gases über die Öffnungen in die Niedertemperaturwärmeübertragerkammer und den Arbeitsraum. In der Niedertemperaturwärmeübertragerkammer wird das Gas sofort wieder abgekühlt und im Arbeitsraum ergibt sich eine Mischtemperatur. Bei Durchströmung von Arbeitsraum und Hochtemperaturwärmeübertragerkammer wird das darin enthaltene Gas erwärmt. Dabei strömt das Gas auch in die Niedertemperaturwärmeübertragerkammer, da immer ein Druckausgleich erfolgt. Aus der Niedertemperaturwärmeübertragerkammer tritt aber kein Gas aus, da keine Durchströmung erfolgen kann.

Eine bevorzugte Ausgestaltung des Gleichdruckmehrkammerbehälters sieht im Bereich wenigstens eines der Arbeitsmediumdurchlässe und/oder der Zirkulationsleitung die Strömungseinrichtung zur Erhöhung einer Strömungsgeschwindigkeit des Arbeitsmediums zwischen der Arbeitskammer und wenigsten der einer der Kammern des Gleichdruckmehrkammerbehälters vor. Im Strömungspfad gibt es durch die Strömungseinrichtung, z. B. den Zirkulationsverdichter oder Lüfter, ein Druckgefälle, jedoch stellt sich zu jedem Zeitpunkt in allen Kammern gleicher Druck ein.

Damit das Arbeitsmedium die Wärmeübertragerkammern aktiv durchströmen kann, fördert idealerweise die Strömungseinrichtung das Arbeitsmedium vom Arbeitsraum zu den Wärmeübertragerkammern, durch die Wärmeübertragerkammern hindurch und wieder in den Arbeitsraum hinein. Zur Anpassung der Konvektion und des Massedurchsatzes des Arbeitsmediums ist bei einer bevorzugten Ausführungsform des erfindungsgemäßen Gleichdruckmehrkammerbehälters der Volumenstrom der Strömungseinrichtung gesteuert, beispielsweise durch einen drehzahlgesteuerten Lüfter. Damit das Arbeitsmedium, welches sich im Arbeitsraum befindet, schnell abgekühlt oder erhitzt werden kann, muss der Wärmetransport vom Arbeitsmedium in die Wand des Gleichdruckmehrkammerbehälters oder umgekehrt minimiert werden. Hierzu verfügt zumindest die Arbeitskammer, vorzugsweise der gesamte Gleichdruckmehrkammerbehälter, über eine Isolierung, insbesondere eine Innenisolierung, mit sehr geringer Wärmeleitfähigkeit.

Zudem ist auf der Oberfläche des Verdrängerfluids bevorzugt ein Trennelement angeordnet, welches bei fallendem oder steigendem Pegel des Verdrängerfluids ebenfalls sinkt oder steigt. Das Trennelement kann isoliert sein oder selbst aus einem isolierenden Material bestehen oder eine Membran, umfassen, die isolierend beschichtet ist oder selbst aus einem isolierenden Material besteht. Das Trennelement dient somit als zumindest thermische Trennung zwischen dem Verdrängerfluid und dem Arbeitsmedium und kann in der bevorzugten Ausgestaltung neben einem verminderten Wärmeübergang auch etwa auftretende Wechselwirkungen zwischen beiden verhindern, wie z. B. das Verdampfen von Verdrängerfluid in das Arbeitsmedium oder die Lösung von Teilen des Arbeitsmediums im Verdrängerfluid. Eine besondere Ausführungsform stellt ein bewegliches Trennelement dar. Das bewegliche Trennelement ist so gestaltet, dass sein Auftrieb durch Materialauswahl und/oder Form des Trennelements gegenüber dem Verdrängerfluid größer ist als seine Gewichtskraft. Dadurch bleibt es immer auf der Oberfläche des Verdrängerfluids.

In einer besonders vorteilhaften Ausgestaltung des Trennelements weist dieses eine thermische Isolierung auf oder besteht selbst aus einem isolierenden Material und verhindert nachteiligen Wärmeübergang zwischen dem Arbeitsmedium und dem Verdrängerfluid.

Weitere Ausführungsformen der Isolierung zwischen Arbeitsmedium und Verdrängerfluid sind ein elastisches Trennelement, das am Arbeitsraum innen befestigt ist, oder eine Membran, umfassend ein bewegliches Trennelement. Das elastische Trennelement und die Membran bilden zugleich eine stoffdichte Barriere zwischen dem Verdrängerfluid und dem Arbeitsmedium aus.

Durch die Isolation wird die Effizienz des erfindungsgemäßen thermodynamischen Energiewandlers weiter verbessert. In vorteilhaften Ausführungsformen ist das Trennelement als eine Scheibe mit von dem Verdrängerfluid weg rechtwinklig oder konisch nach oben gezogenem Rand, als eine Hohlstruktur oder als ein abgeplattetes Rotationsellipsoid ausgeführt. Das Trennelement kann zusätzlich ein Dichtelement aufweisen, um den Spalt zur Innenisolierung des Behälters zu schließen. Wenn das Trennelement eine umlaufende Dichtung zur Innenwand des Kraftübertragungsraums aufweist, sodass das Arbeitsmedium nicht in direktem Kontakt zum Verdrängerfluid steht, dann wäre die Funktion ähnlich der eines Kolbenspeichers. Das Trennelement entspricht dann dem Kolben, die Arbeitskammer, in dem das Trennelement zumindest längsbeweglich angeordnet ist, dem Zylinder.

Die Innenisolation der Arbeitskammer und die Isolation zum Verdrängerfluid kann auch in einem Teil durch eine Membran, auch als Blase bezeichnet, erzielt werden, vor allem wenn deren Wand eine sehr geringe Wärmeleitfähigkeit aufweist. Diese Ausführungsform hat den Vorteil, dass die Membran zusätzlich den Arbeitsraum vom Verdrängerfluid hermetisch abtrennt und Dichtheitsprobleme vermeidet. Damit wird ein Lösen und Entgasen des Arbeitsmediums in das Verdrängerfluid bzw. aus dem Verdrängerfluid vor allem bei Druckänderung noch besser verhindert, als es durch das Trennelement möglich ist.

Um die Temperaturen in den Wärmeübertragerkammern bzw. den in den einzelnen Prozessschritten notwendigen Wärmestrom, der zwischen einer externen Wärmequelle oder Kältequelle über die Wärmeübertrager mit dem Arbeitsmedium im erfindungsgemäßen thermodynamischen Energiewandler übertragen wird, besser steuern zu können, kann wenigstens eine der Wärmeübertragerkammern steuerbar ausgeführt sein. Hierzu ist es beispielsweise vorgesehen, dass mehrere, einzeln steuerbare Wärmeübertrager in einer Wärmeübertragerkammer angeordnet sind oder mehrere einzelne Kammern jeweils mit Hochtemperatur- bzw. Niedertemperaturwärmeübertragern ausgebildet sind. Die Verbindung dieser Kammern untereinander kann wiederum drosselbar, beispielsweise durch Klappen, Blenden oder Schieber, sein. Je nach Betriebsweise des Systems sind für Erhitzen, Halten einer Temperatur und nichtisotherme Expansion oder Kompression unterschiedliche Wärmemengen notwendig. Durch eine Drosselung im Sinne der vorliegenden Erfindung kann Wärme außerhalb oder innerhalb des Kammersystems zwischengespeichert werden.

Außerdem ist es möglich, über verstellbare Wände, Stellkolben oder durch ein veränderliches Niveau einer Flüssigkeit, welche den unteren Teil einer Wärmeübertragerkammer füllt, das effektiv nutzbare Volumen in einer Wärmeübertragerkammer so zu verändern, dass stets das optimale Leistungsverhältnis von Hochtemperaturwärmeübertragerkammer und Niedertemperaturwärmeübertragerkammer vorliegt. Die verstellbaren Volumina der Wärmeübertragerkammern dienen dem effizienten Betrieb des Systems, denn umso kleiner das Volumen der Wärmeübertragerkammern im Verhältnis zum Volumen des Arbeitsraums ist, umso größer ist die nutzbare Leistung. Je nach Wärme- oder Kältebedarf sind deshalb unterschiedliche Volumina der Wärmeübertragerkammern notwendig. Damit weist bei dem erfindungsgemäßen Gleichdruckmehrkammerbehälter wenigstens eine der Wärmeübertragerkammern einen einstellbaren Arbeitspunkt auf, indem das Volumen der Wärmeübertragerkammer einstellbar ist. Dies kann durch eine Stellkolbenanordnung, umfassend ein Zylinderelement und einen Stellkolben, durch mittels Steuerklappen zuschaltbare Steuerkammern oder durch eine Flüssigkeitssteuerung, wobei eine Steuerflüssigkeit Teile des Volumens der Wärmeübertragerkammer einnimmt, eingestellt werden.

Zwei dieser als Gleichdruckmehrkammerbehälter ausgeführten Temperierbehälter sind miteinander über die Fluidenergieumformeranordnung durch eine Hauptleitung in Form einer Rohr- oder Schlauchverbindung oder einer Verbindungsbohrung verbunden. In diese Verbindung ist mindestens ein Fluidenergieumformer integriert. Dies kann zum Beispiel ein rotatorisch wirkender Fluidmotor, aber auch ein Linearmotor oder ein sonstiger beweglicher Aktor sein.

Damit die Durchströmung des Fluidenergieumformers geregelt werden kann, ist in die Hauptleitung ebenfalls eine Ventilanordnung integriert. Die Fluidenergieumformeranordnung ist dann in der Weise ausgebildet, dass die Hauptleitung für das Verdrängerfluid mit dem Fluidenergieumformer über eine Ventilanordnung verbunden ist, sodass die Strömungsrichtung in dem Fluidenergieumformer unabhängig von der Strömungsrichtung zwischen der Arbeitskammer einstellbar ist und/oder die Durchflussmenge des Verdrängerfluids in Abhängigkeit des Drucks und/oder der Temperatur des Arbeitsmediums im Druckbehälter gesteuert wird. Dadurch wird unabhängig von der Betriebsphase des Gleichdruckbehälters beispielsweise immer dieselbe Drehrichtung eines rotierenden Energiewandlers ermöglicht.

Parallel zu dieser Verbindung über die Hauptleitung können die zwei oder mehr Gleichdruckmehrkammerbehälter zusätzlich durch eine Bypassleitung mit Ventil verbunden sein, um einen schnellen Transport des Verdrängerfluids von dem Kraftübertragungsraum eines der Gleichdruckmehrkammerbehälter in den Kraftübertragungsraum eines anderen der Gleichdruckmehrkammerbehälter zu ermöglichen. Denn bei geringen Druckunterschieden zwischen den Kraftübertragungsräumen ist die über die Hauptleitung übertragbare Leistung nur noch sehr gering, so dass es insgesamt effizienter ist, den Vorgang des Druckausgleichs über die Bypassleitung zu beschleunigen, um den nächsten Prozessschritt eher einleiten zu können. Dazu ist bei dem Energiewandler zwischen der ersten und der zweiten Arbeitskammer eine Bypassleitung mit steuerbarem Durchfluss des Verdrängerfluids vorgesehen, wobei die Bypassleitung an jeder der mit Verdrängerfluid beaufschlagten Arbeitskammern jeweils im Bereich des Kraftübertragungsraums angeschlossen ist.

Besondere Vorteile bringt ein Gleichdruckmehrkammerbehälter, bei dem in einem Wandkanal ein Regenerator vorgesehen ist, der eine wärmespeichernde Füllmasse umfasst und der in einer ersten Durchströmungsrichtung Wärme aufnehmen und in einer zweiten Durchströmungsrichtung Wärme abgeben kann. Die Durchströmungsrichtung ist mittels der Schließvorrichtung, beispielsweise ausgeführt als Drehschieber, und wenigstens zwei getrennter Bereiche des Wandkanals steuerbar. Die optionale Ergänzung des Gleichdruckmehrkammerbehälters um den Regenerator verbessert den Gesamtwirkungsgrad weiter. Der Regenerator ist ein Wärmeübertrager mit der als Kurzzeit-Wärmespeicher dienenden Füllmasse, auch als Speichermasse bezeichnet, die abwechselnd von dem warmen und dem kalten Arbeitsmedium durchströmt wird. Wärme wird zuerst vom Arbeitsmedium auf den Wärmespeicher übertragen, um anschließend im Folgetakt wieder an das nachfolgend durchströmende Arbeitsmedium abgegeben zu werden. Wenn beispielsweise bei Erwärmung auch Arbeitsmedium in die Niedertemperaturwärmeübertragerkammer strömt, kann die Wärme zuvor an die Speichermasse des Regenerators abgegeben und in dieser gespeichert werden. Das Arbeistmedium muss also nicht vollständig in der Niedertemperaturwärmeübertragerkammer abgekühlt werden, sondern tritt bereits vorgekühlt dort ein. Wenn Arbeitsmedium aus der Niedertemperaturwärmeübertragerkammer austritt, kann die im Regenerator gespeicherte Wärme an das Arbeitsmedium übertragen werden, sodass ein Teil der erforderlichen Wärme zur Erwärmung des Arbeitsmediums nicht durch die externe Wärmezufuhr bereitgestellt werden muss.

Der Gleichdruckmehrkammerbehälter ist nach einer vorteilhaften Ausführungsform der Erfindung mit einem Drehschieber ausgestattet, der auch die Zirkulationsleitung steuert, wenn diese als ein Wandkanal in einer Kanaltrennwand angeordnet ist.

Die Aufgabe wird weiterhin durch ein Verfahren zum Betrieb des thermodynamischen Energiewandlers, wie er zuvor beschrieben wurde, gelöst. Dabei wird

a. in einem ersten Modus in der Hochtemperaturwärmeübertragerkammer eines ersten Gleichdruckmehrkammerbehälters über den Hochtemperaturwärmeübertrager Wärme an das Arbeitsmedium übertragen und das Arbeitsmedium auch in der Arbeitskammer des ersten Gleichdruckmehrkammerbehälters expandiert und/oder in der Niedertemperaturwärmeübertragerkammer eines zweiten Gleichdruckmehrkammerbehälters über den Niedertemperaturwärmeübertrager Wärme abgeführt und das Arbeitsmedium auch in der Arbeitskammer des zweiten Gleichdruckmehrkammerbehälters kontrahiert, wobei infolge des Druckunterschiedes der Arbeitsmedien innerhalb der Gleichdruckmehrkammerbehälter das Verdrängerfluid durch die Hauptleitung und die Fluidenergieumformeranordnung von der Arbeitskammer des ersten Gleichdruckmehrkammerbehälters zur Arbeitskammer des zweiten Gleichdruckmehrkammerbehälters gedrückt wird und kinetische Energie des Verdrängerfluids in mechanische Energie umgewandelt wird und

b. in einem zweiten Modus in der Hochtemperaturwärmeübertragerkammer des zweiten Gleichdruckmehrkammerbehälters über den Hochtemperaturwärmeübertrager Wärme an das Arbeitsmedium übertragen und das Arbeitsmedium auch in der Arbeitskammer des zweiten Gleichdruckmehrkammerbehälters expandiert und/oder in der Niedertemperaturwärmeübertragerkammer des ersten Gleichdruckmehrkammerbehälters über den Niedertemperaturwärmeübertrager Wärme abgeführt und das Arbeitsmedium auch in der Arbeitskammer des ersten Gleichdruckmehrkammerbehälters kontrahiert, wobei infolge des Druckunterschiedes der Arbeitsmedien innerhalb der Gleichdruckmehrkammerbehälter das Verdrängerfluid durch die Hauptleitung und die Fluidenergieumformeranordnung von der Arbeitskammer des zweiten Gleichdruckmehrkammerbehälters zur Arbeitskammer des ersten Gleichdruckmehrkammerbehälters gedrückt wird und kinetische Energie des Verdrängerfluids in mechanische Energie umgewandelt wird.

Der oben beschriebene erfindungsgemäße thermodynamische Energiewandler ermöglicht die flexible Umsetzung unterschiedlicher Kreisprozesse durch Variation und Kombination verschiedener thermodynamischer Zustandsänderungen und deren Abfolgen im Gesamtprozess. So können isotherme, isobare, isochore und adiabatische (isentrope) Zustandsänderungen des Arbeitsmediums in den einzelnen Behältern durch gezielte Steuerung der Zufuhr und Abfuhr thermischer Energie und Steuerung der Volumenänderung des Arbeitsmediums durch Steuerung der Durchflussmenge in der Fluidenergieumformereinheit realisiert werden. Insbesondere die gezielte Steuerung der Durchströmung der Wärmeübertragerkammern mittels mindestens einer Strömungseinrichtung, z. B. Ventilator, Lüfter oder Zirkulationsverdichter, und Verschluss einzelner Öffnungen durch die Schließvorrichtung in dem Gleichdruckmehrkammerbehälter und durch die Wechselwirkung mit einem zweiten oder weiteren Gleichdruckmehrkammerbehälter, wobei die Kraftübertragungsräume über die hydraulische Einrichtung verbunden sind, ermöglicht isotherme, isochore, isobare und adiabate Zustandsänderungen. Zu der hydraulischen Einrichtung gehören vor allem die Hauptleitung und die mit ihr verbundenen Einrichtungen (Ventilanordnung, Fluidenergieumformeranordnung), aber auch die Bypassleitung.

Der zuvor beschriebene Energiewandler kann vorteilhafterweise wenigstens zwei Paare oder wenigstens zwei Gruppen aus wenigstens einem ersten und einem zweiten Gleichdruckmehrkammerbehälter mit dem Fluidenergieumformer umfassen. Diese sind in der Weise über die Ventilanordnung gekoppelt, dass ein phasenversetzter Parallelbetrieb der Paare von Arbeitskammern eine quasikontinuierliche Zuführung von Verdrängerfluid zu dem Fluidenergieumformer ermöglicht. Dadurch wird eine kontinuierliche Energieabgabe möglich.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:

Fig. 1: schematisch eine Ausführungsform eines erfindungsgemäßen thermodynamischen Energiewandlers;

Fig. 2: schematisch eine Ausführungsform einer erfindungsgemäßen Wärmeübertrageranordnung mit einer veränderbar großen Wärmeübertragerkammer;

Fig. 3: schematisch eine weitere Ausführungsform einer erfindungsgemäßen Wärmeübertrageranordnung mit zwei veränderbar großen Wärmeübertragerkammern;

Fig. 4: schematisch eine weitere Ausführungsform einer erfindungsgemäßen Wärmeübertrageranordnung mit einer veränderbar großen Wärmeübertragerkammer durch Steuerkammern;

Fig. 5: schematisch eine weitere Ausführungsform einer erfindungsgemäßen Wärmeübertrageranordnung mit einer veränderbar großen Wärmeübertragerkammer durch Flüssigkeitssteuerung;

Fig. 6: schematisch eine weitere Ausführungsform einer erfindungsgemäßen Wärmeübertrageranordnung mit einem modularen Baukastenprinzip;

Fig. 7: schematisch eine weitere Ausführungsform einer erfindungsgemäßen Wärmeübertrageranordnung mit Strömungseinrichtungen;

Fig. 8: schematisch eine Ausführungsform einer erfindungsgemäßen Wärmeübertrageranordnung mit Strömungseinrichtung in der Zirkulationsleistung;

Fig. 9: schematisch eine Ausführungsform einer erfindungsgemäßen Wärmeübertrageranordnung in Kompaktbauweise;

Fig. 10: schematisch eine Ausführungsform einer erfindungsgemäßen Wärmeübertrageranordnung mit Regenerator in zwei Betriebszuständen;

Fig. 11: schematisch in Schnittdarstellung fünf Ausführungsformen eines Trennelements eines erfindungsgemäßen thermodynamischen Energiewandlers;

Fig. 12: schematisch eine Ausführungsform einer erfindungsgemäßen Wärmeübertrageranordnung mit elastischem Trennelement;

Fig. 13: schematisch eine Ausführungsform einer erfindungsgemäßen Wärmeübertrageranordnung mit Membran und Trennelement;

Figuren 14a und 14b: schematisch in Längsschnittdarstellung eine weitere Ausführungsform eines rohrförmigen Gleichdruckmehrkammerbehälters;

Figuren 15a bis 15c: schematisch in Querschnittdarstellung eine weitere Ausführungsform des rohrförmigen Gleichdruckmehrkammerbehälters und

Figuren 16a und 16b:, zeigen jedoch schematisch in Querschnittdarstellung als Schnittebenen A-A und B-B aus Fig. 14b eine weitere Ausführungsform des rohrförmigen Gleichdruckmehrkammerbehälters.

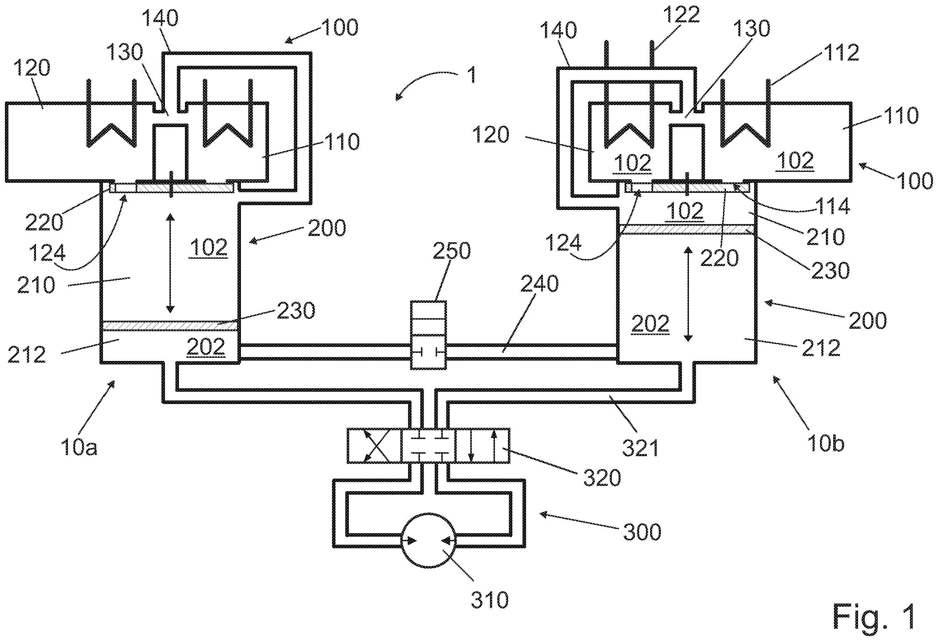

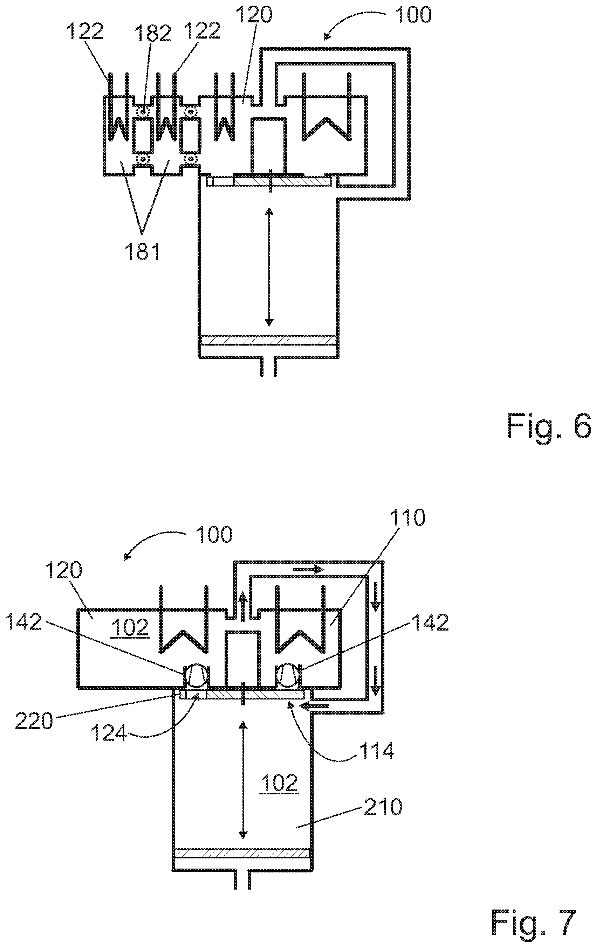

Fig. 1 zeigt schematisch eine Ausführungsform eines erfindungsgemäßen thermodynamischen Energiewandlers 1, umfassend zwei Wärmeübertrageranordnungen 100 und zwei mit den Wärmeübertrageranordnungen 100 verbundene Arbeitskammern 200, wobei jeweils eine Wärmeübertrageranordnung 100 und eine Arbeitskammer 200 zusammen einen Gleichdruckmehrkammerbehälter 10a, 10b bilden. In dem Energiewandler 1 mit den Arbeitskammern 200 laufen durch eine Folge unterschiedlicher Zustandsänderungen eines gasförmigen Arbeitsmediums 102 Kreisprozesse ab, jeweils einschließlich einander abwechselnde Kompression und Expansion innerhalb jeder Arbeitskammer 200. Dies wird ermöglicht durch die wechselweise Zufuhr höher temperierter Wärmeenergieströme über einen Hochtemperaturwärmeübertrager 122 und Abfuhr niedertemperierter Wärmeenergieströme über einen Niedertemperaturwärmeübertrager 112. Die Kühlung, aber auch die Erwärmung des Arbeitsmediums erfolgen bevorzugt mit Hilfe geregelter Wärmeübertrager 112 bzw. 122 sowie Stellantrieben und/oder Strömungseinrichtungen 142 (vgl. Fig. 7 bis 10), wie z. B. Lüftern oder Ventilatoren.

Jeweils zwei Arbeitskammern 200 weisen einen oberen und einen unteren Bereich auf, wobei der obere Bereich mit Arbeitsmedium 102 beaufschlagt und als Arbeitsraum 210 bezeichnet wird, wobei der unterhalb des Arbeitsraumes 210 ausgebildete untere Bereich mit einem Verdrängerfluid 202 beaufschlagt und als Kraftübertragungsraum 212 bezeichnet wird. Das Verdrängerfluid 202 ist ein quasi inkompressibles Fluid. Es wirkt somit ähnlich wie ein Kolben mit Kolbenstange in mechanischen Systemen und dient der Kraftübertragung der Druckkraft, die das Arbeitsmedium 102 aufbringt und die an das Verdrängerfluid 202 übertragen wird. Beide Arbeitskammern 200 sind zumindest über eine Hauptleitung 321 mit einer Ventilanordnung 320 und einer Fluidenergieumformeranordnung 300 miteinander verbunden. Die Ventilanordnung 320 umfasst Ventile sowie bevorzugt auch Stell- und Regelantriebe, die Fluidenergieumformeranordnung 300 umfasst wenigstens einen Fluidenergieumformer 310, beispielsweise einem Hydraulikmotor. Die Hauptleitung 321 dient somit dem Transport des Verdrängerfluids 202 zwischen den beiden Kraftübertragungsräumen 212.

Weiterhin befindet sich zwischen dem Arbeitsraum 210, dem oberen Bereich der Arbeitskammern 200, und dem Kraftübertragungsraum 212, soweit dieser mit Verdrängerfluid beaufschlagt ist, ein frei bewegliches, thermisch isolierend wirkendes Trennelement 230.

Als besonders vorteilhaft bei der dargestellten, bevorzugten Ausführungsform der Erfindung erweist sich, dass die bei großen Temperaturdifferenzen auftretenden, den optimalen Ablauf belastenden Druckwechsel bei der Taktfolge der Zustandsänderungen beseitigt werden. Die Druckwechsel wirken sich nachteilig auf beispielsweise Stellantriebe für Ventile oder auf Strömungseinrichtungen aus. Sie entstehen vor allem infolge der schnell taktenden Zustandsänderungen und werden erfindungsgemäß durch Gleichdruck in allen Kammern, den Wärmeübertragerkammern 110, 120 und der Arbeitskammer 200, vermieden. Dies erfolgt, indem die Kammern über Öffnungen miteinander verbunden sind, die auch einen Druckausgleich ermöglichen. Die Wärmeübertragerkammern 110, 120 sind über eine Kammerbrücke 130 miteinander verbunden.

Mit einem zusätzlichen Bypass, der Bypassleitung 240, und dem Ventil 250 zur Bypasssteuerung zwischen den Arbeitskammern 200 kann das Verdrängerfluid 202 schnell von einer zur anderen Arbeitskammer 200 überführt werden, beispielsweise zur Beschleunigung des Betriebsablaufs, wenn gegen Ende einer Betriebsphase nur noch geringe Druckunterscheide zwischen den Gleichdruckmehrkammerbehältern 10a, 10b vorliegen.

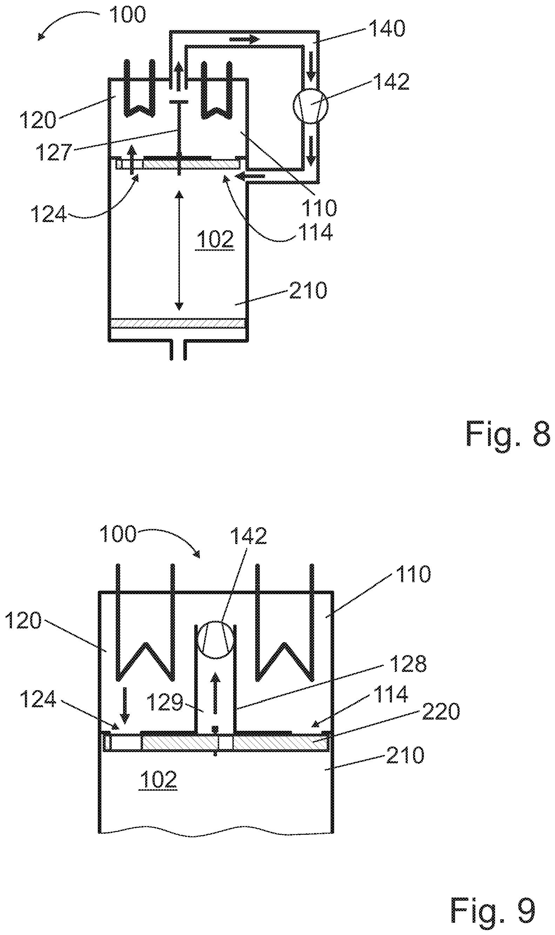

Das Wärmeübertragerkammerpaar mit den unterschiedlich großen Wärmeübertragerkammern 110, 120 ist über eine Zirkulationsleitung 140 mit dem Arbeitsraum 210 im Inneren der Arbeitskammer 200 verbunden. Die Zirkulationsleitung 140 mündet dazu bevorzugt direkt an die Wärmeübertragerkammern 110, 120 (vgl. Fig. 8) oder, wie hier dargestellt, in eine Kammerbrücke 130, über die die Wärmeübertragerkammern 110, 120 überbrückt und miteinander verbunden sind. Die Verbindung einer der Wärmeübertragerkammern 110, 120 zum Arbeitsraum 210 mit dem Arbeitsmedium 102, der sich zwischen einer Schließvorrichtung, z. B. einem Drehschieber 220, und dem beweglichen Trennelement 230 erstreckt, kann über den Drehschieber 220 geöffnet oder geschlossen werden. Durch die Zirkulationsleitung 140 und die Verbindung einer der Wärmeübertragerkammern 110, 120 zum Arbeitsraum 210 ist eine Zirkulation, steuerbar durch Öffnung, Abschattung oder Verschluss der Öffnungen, die als Arbeitsmediumdurchlässe 114 und 124 dienen, mittels des Drehschiebers 220 möglich.

Anhand der Fig. 1 kann auch das erfindungsgemäße Verfahren beschrieben werden. Nachfolgend ist beispielhaft der Betrieb des erfindungsgemäßen Energiewandlers im Stirlingkreisprozess dargestellt und beschrieben. Die Zirkulation verläuft dabei über die wenigstens zwei offenen Verbindungen zwischen dem Arbeitsraum 210 und einer der Wärmeübertragerkammern 110, 120, von denen wenigstens eine mit der Schließvorrichtung 220, beispielsweise einem Drehschiebersegment, verschlossen oder abgeschattet werden kann. Die Zirkulation verläuft dabei entweder durch die Wärmeübertragerkammer 110 und aus der Wärmeübertragerkammer 110 oder durch die Wärmeübertragerkammer 120 und aus der Wärmeübertragerkammer 120, jeweils insbesondere über die Zirkulationsleitung 140, die als die zweite offene Verbindung fungiert und die beispielsweise als eine gesonderte Leitung oder aber auch nur als ein zweiter Ausgang zum Arbeitsraum 210 ausgeführt sein kann, in den Arbeitsraum 210.

Wenn das Arbeitsmedium 102 komprimiert wird und dabei ständig weiter so abgekühlt wird, dass der Druck konstant bleibt oder ein Gas expandiert und die Temperatur entsprechend der Volumenvergrößerung erhöht wird, dann wird ein isobarer Prozessschritt erreicht.

In den zwei miteinander verbundenen, gleichartig aufgebauten Gleichdruckmehrkammerbehältern 10 befindet sich das gasförmige Arbeitsmedium 102. An den Wärmeübertragern 122, 112 liegen einerseits ein heißes Medium und andererseits ein kaltes Medium als Wärmequelle und Wärmesenke an. Die Hauptleitung 321 und die Bypassleitung 240 zwischen den beiden Gleichdruckmehrkammerbehältern 10a, 10b im Bereich der Kraftübertragungsräume 212 sind geschlossen.

Im ersten Gleichdruckmehrkammerbehälter 10a wird der Drehschieber 220 so gestellt, dass die Verbindung zwischen dem Arbeitsraum 210 und der Niedertemperaturwärmeübertragerkammer 110 abgeschottet ist und das Arbeitsmedium 102 bevorzugt durch die Hochtemperaturwärmeübertragerkammer 120 und den Arbeitsraum 210 zirkuliert. Dadurch wird das Arbeitsmedium 102 erwärmt und im gesamten Behältervolumen des Gleichdruckmehrkammerbehälters 10a steigt der Druck an.

Das Abschotten mittels der Schließvorrichtung, beispielsweise mittels eines Drehschiebersegments des Drehschiebers 220, ist nicht als ein kompletter Verschluss vorgesehen, weshalb das Verschließen in dieser Art auch als "Abschatten" bezeichnet wird. Das Segment wird vor die Öffnung, die den Arbeitsmediumdurchlass 114, 124 bildet, bewegt, es stellt aber keinen gasdichten Verschluss dar. Dabei wird nur der Strömungswiderstand derart erhöht, dass das gasförmige Arbeitsmedium 102 durch einen Strömungspfad mit geringerem Strömungswiderstand strömt und bevorzugt durch den beschriebenen Pfad zirkuliert. Hieraus resultiert ein besonderer Vorteil der vorliegenden Erfindung gegenüber dem Einsatz bekannter Ventile, mit den Ventilen abgeschlossenen Kammern und daraus resultierenden Druckunterschieden. Diese Ventile wären sehr aufwendig und teuer. Die Erfindung verzichtet daher auf solche Elemente und erhöht durch starke Verringerung des durchströmbaren Querschnitts lediglich den Strömungswiderstand.

Parallel zu den Einstellungen im ersten Gleichdruckmehrkammerbehälter 10a wird die Schließvorrichtung 220 im zweiten Gleichdruckmehrkammerbehälter 10b so gestellt, dass die Verbindung zwischen dem Arbeitsraum 210 und der Hochtemperaturwärmeübertragerkammer 120 abgeschottet ist und das Arbeitsmedium 102 bevorzugt durch die Niedertemperaturwärmeübertragerkammer 110 und den Arbeitsraum 210 zirkuliert. Dadurch wird das Arbeitsmedium 102 im zweiten Gleichdruckmehrkammerbehälter 10b abgekühlt und im gesamten Behältervolumen des zweiten Gleichdruckmehrkammerbehälters 10b sinkt der Druck.

Somit hat sich zwischen den beiden Gleichdruckmehrkammerbehältern 10a, 10b ein Druckunterschied und somit ein Potential Arbeit zu verrichten eingestellt.

Anschließend wird durch die Ventilanordnung 320 in einem zweiten Prozessschritt die Hauptleitung 321 für das Verdrängerfluid 202, die den Kraftübertragungsraum 212 des ersten Gleichdruckmehrkammerbehälters 10a mit dem Kraftübertragungsraum 212 des zweiten Gleichdruckmehrkammerbehälters 10b verbindet, geöffnet. Das Arbeitsmedium 102 im ersten Gleichdruckmehrkammerbehälter 10a expandiert, während das Arbeitsmedium 102 im zweiten Gleichdruckmehrkammerbehälter 10b komprimiert wird. Dabei wird das Verdrängerfluid 202 aus dem Kraftübertragungsraum 212 des ersten Gleichdruckmehrkammerbehälters 10a in den Kraftübertragungsraum 212 des zweiten Gleichdruckmehrkammerbehälters 10b geschoben und durchströmt dabei den Fluidenergieumformer 310, der Arbeit verrichtet. Die Drücke in den beiden Gleichdruckmehrkammerbehältern 10a, 10b gleichen sich dabei immer mehr an. Die Bewegung bzw. die Strömung des Verdrängerfluids 202 kommt zum Stillstand, wenn Druckgleichheit erreicht ist.

Wenn die Schließvorrichtung 220 weiterhin in gleicher Stellung wie in Prozessschritt 1 verbleibt und das Arbeitsmedium 102 weiter zirkuliert wird, erfolgen die Expansion und Kompression nahezu oder völlig isotherm. Werden die Verbindungen zu jeweils allen Wärmeübertragerkammern 110, 120 mittels der Schließvorrichtung 220 abgeschiebert, erfolgen die Expansion und die Kompression adiabat.

Um den Druck in den Gleichdruckmehrkammerbehältern 10a, 10b schneller auszugleichen, kann in einem dritten, fakultativen Prozessschritt die Hauptleitung 321 geschlossen und die Bypassleitung 240 geöffnet werden, um ein schnelles Überströmen des Verdrängerfluids 202 vom ersten Gleichdruckmehrkammerbehälter 10 zum zweiten Gleichdruckmehrkammerbehälter 10b und damit Einstellung der Druckgleichheit zwischen beiden zu erzielen. Am Ende von Prozessschritt 3 wird die Bypassleitung 240 wieder geschlossen.

In einem vierten Prozessschritt wird die Schließvorrichtung 220 im ersten Gleichdruckmehrkammerbehälter 10a in die Position bewegt, dass die Verbindung zur Niedertemperaturwärmeübertragerkammer 110 geöffnet und die Verbindung zur Hochtemperaturwärmeübertragerkammer 120 geschlossen ist. Das Arbeitsmedium 102 zirkuliert somit durch den Niedertemperaturwärmeübertrager 110 und den Arbeitsraum 210 des ersten Gleichdruckmehrkammerbehälters 10a.

Das Arbeitsmedium 102 im Arbeitsraum 210 wird dabei abgekühlt und der Druck im gesamten ersten Gleichdruckmehrkammerbehälter 10a sinkt. Im zweiten Gleichdruckmehrkammerbehälter 10b wird die Schließvorrichtung 220 so bewegt, dass die Verbindung zur Hochtemperaturwärmeübertragerkammer 120 geöffnet und die Verbindung zur Niederdruckwärmeübertragerkammer 110 geschlossen ist. Das Arbeitsmedium 102 im zweiten Gleichdruckmehrkammerbehälter 10b zirkuliert nun durch den Arbeitsraum 210 und die Hochtemperaturwärmeübertragerkammer 120. Die Temperatur und der Druck des Arbeitsmediums 102 im zweiten Gleichdruckmehrkammerbehälter 10b steigen an.

Im anschließenden fünften Prozessschritt wird die Hauptleitung 321 erneut geöffnet, das Arbeitsmedium 102 im zweiten Gleichdruckmehrkammerbehälter 10b expandiert, während das Arbeitsmedium 102 im ersten Gleichdruckmehrkammerbehälter 10a komprimiert wird. Dabei strömt das Verdrängerfluid 202 über den Fluidenergieumformer 310 vom Kraftübertragungsraum 212 des zweiten Gleichdruckmehrkammerbehälters 10b in den Kraftübertragungsraum 212 des ersten Gleichdruckmehrkammerbehälters 10a bis in den Gleichdruckmehrkammerbehältern 10a, 10b gleicher Druck herrscht oder die Hauptleitung 321 geschlossen wird. Wenn die Drehschiebersegmente der Schließvorrichtungen 220 weiterhin in der Position aus Prozessschritt 4 stehen, verlaufen die Expansion und die Kompression erneut isotherm, sind die Verbindungen zwischen den Kammern 110, 120, 210 abgeschiebert, verlaufen die Expansion und Kompression adiabat. Der Prozessschritt 5 ist der eigentliche reverse Arbeitstakt.

In einem sechsten Prozessschritt kann zum schnellen Druckausgleich zwischen den beiden Gleichdruckmehrkammerbehältern 10a, 10b erneut die Bypassleitung 240 geöffnet werden. Nach diesen sechs Prozessschritten ist der Ausgangszustand wieder erreicht und der Prozess beginnt erneut bei Prozessschritt 1. Das erfindungsgemäße Verfahren umfasst insgesamt sechs Prozessschritte, bedingt durch die beiden fakultativen Bypassschritte.

Das Erwärmen oder Abkühlen des Gases bei einem gleichbleibenden Volumen (betrifft die zuvor beschriebenen Prozessschritte 1 und 3) im Gleichdruckmehrkammerbehälter 10a, 10b stellt eine isochore Zustandsänderung dar.

Wenn das Arbeitsmedium 102 komprimiert wird und dabei ständig weiter so abgekühlt wird, dass der Druck konstant bleibt oder ein Gas expandiert und die Temperatur entsprechend der Volumenvergrößerung erhöht wird, dann erfolgt ein isobarer Prozessschritt. Es gilt immer

$$\frac{p \times V}{T} = \text{konst.}$$

und mit einem Gleichdruckmehrkammerbehälter 10a, 10b (bzw. durch die Wechselwirkung mit einem zweiten Gleichdruckmehrkammerbehälter) ist, je nachdem ob Wärme zugeführt oder abgeführt wird und ob eine Volumenänderung erfolgt, jegliche Zustandsänderung des Arbeitsmediums 102 realisierbar.

In Prozessschritt 2 ist aber dennoch auch die Möglichkeit einer adiabaten Expansion bzw. Kompression vorgesehen. Wenn die Schließvorrichtung 220 beide Verbindungen der Arbeitskammer 210 zu den Wärmeübertragerkammern 110, 120 hin abschiebert, dann wird der Energiewandler nicht im Stirling-Kreisprozess, sondern im Otto-Kreisprozess betrieben.

Auch Kreisprozesse mit Taktzahlen ungleich vier, wie der Seilinger-Prozess mit fünf Takten oder der Atkinson-Kreisprozess mit sechs Takten sind umsetzbar, wenn sich die expandierenden und komprimierenden Takte gegenüber befinden und der Betrag der Volumenänderung gleich groß ist. Weiterhin kann die Expansion nur stattfinden, wenn der um 180° versetzte, komprimierende Takt einen geringeren Druck aufweist.

Durch die Umkehrung der Laufrichtung von möglichen Kreisprozessen (linksläufige Kreisprozesse) wird mechanische Energie in thermische Energie gewandelt. Der erfindungsgemäße Energiewandler, auch als hydropneumatischer Energiewandler bezeichnet, arbeitet damit als Kältemaschine bzw. Wärmepumpe.

Auch ein isothermer Vorgang mit Expansion oder Kompression bei konstant gehaltener Temperatur durch Nachheizen oder Kühlen, ein isochorer Vorgang, bei dem keine Volumenarbeit verrichtet wird, und ein adiabater Vorgang mit Expansion bzw. Kompression bei gleichzeitiger Druck- und Temperaturänderung sind realisierbar.

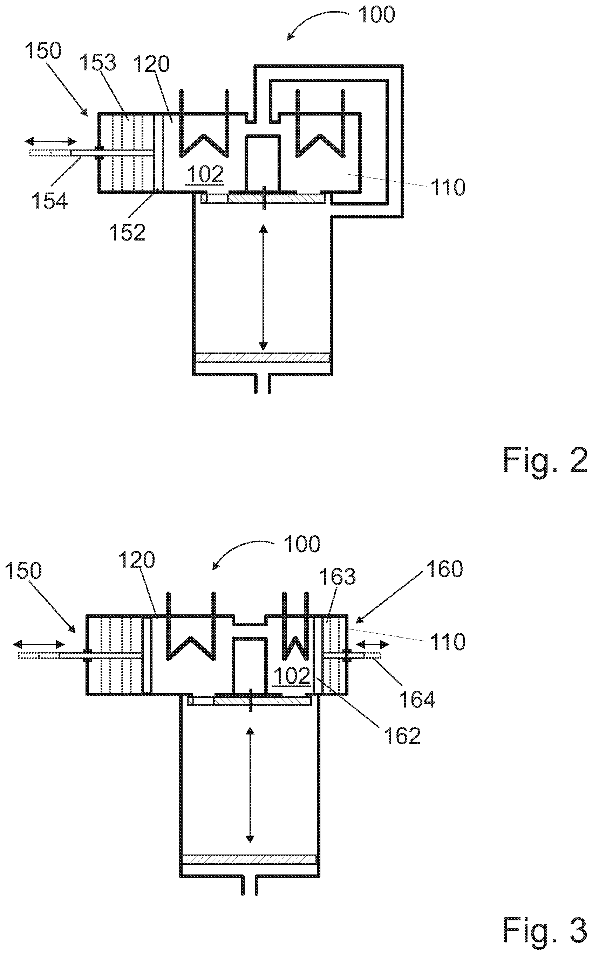

Fig. 2 zeigt schematisch eine weitere Ausführungsform einer erfindungsgemäßen Wärmeübertrageranordnung 100. Gezeigt wird eine Ausführung der Wärmeübertrageranordnung 100 mit veränderbar unterschiedlich großen Wärmeübertragerkammern 110, 120, mit denen eine Anpassung an unterschiedliche Temperaturdifferenzen durch die Anpassung des Volumens der Hochtemperaturwärmeübertragerkammer 120 des höher temperierten Arbeitsmediums 102 durch Voreinstellung mit einer Stellkolbenanordnung 150 möglich ist, während das Volumen der Niedertemperaturwärmeübertragerkammer 110 unveränderlich ist. Die Stellkolbenanordnung 150 weist einen in einem Zylinderelement 153 angeordneten Stellkolben 152 auf. Das Zylinderelement 153 umfasst einen Bereich der Hochtemperaturwärmeübertragerkammer 120. Der Stellkolben 152 ist dort beweglich angeordnet und weist zu seiner Bedienung eine Kolbenstange 154 auf. Mit der Veränderung des Volumens der Wärmeübertragerkammern 110, 120 kann der Wirkungsgrad der Wärmeübertragung auf das Arbeitsmedium 102 verbessert werden.

Fig. 3 zeigt schematisch eine weitere Ausführungsform einer erfindungsgemäßen Wärmeübertrageranordnung 100. Es ist dargestellt, wie eine Ausführung mit differenzierter Anpassung an Temperaturunterschiede des Arbeitsmediums 102 erfolgen kann, indem in beiden Wärmeübertragerkammern 110, 120 veränderliche Stellkolbenanordnungen 150, 160 angeordnet sind. Auch die zweite Stellkolbenanordnung 160 umfasst ebenso einen Stellkolben 162, ein Zylinderelement 163 und eine Kolbenstange 164. Dadurch lässt sich die Wärmeübertrageranordnung 100 insgesamt an das Temperaturniveau der Wärmequelle und der Wärmesenke anpassen, so dass beide Wärmeübertragerkammern 110, 120 in einem optimalen Leistungsbereich arbeiten können.

Eine besonders vorteilhafte, alternative Ausführungsform sieht eine ebensolche Zirkulationsleitung 140 vor, wie die Figuren 1, 2 sowie 4 bis 8.

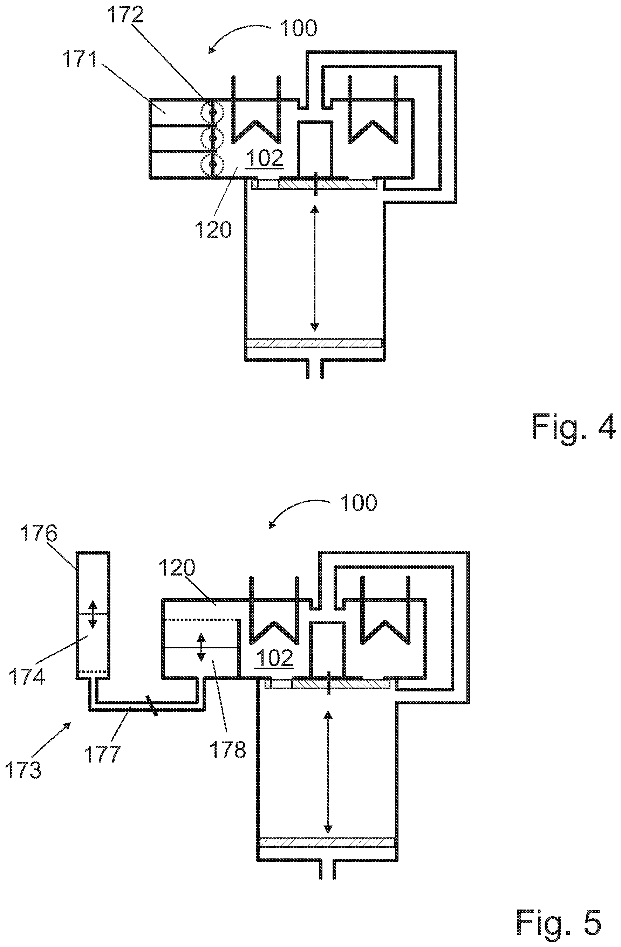

Fig. 4 zeigt schematisch eine weitere Ausführungsform einer erfindungsgemäßen Wärmeübertrageranordnung 100. Es ist ersichtlich, dass die Volumenänderung des Arbeitsmediums 102 in einer der Wärmeübertragerkammern, hier der Hochtemperaturwärmeübertragerkammer 120, auch durch Zuschaltung mehrerer kleiner Steuerkammern 171 über Steuerklappen 172 oder Ventile erreicht werden kann. Je mehr Steuerkammern 171 zugeschaltet werden, umso größer ist das wirksame Volumen der Hochtemperaturwärmeübertragerkammer 120. Dies trägt ebenso zum Erreichen optimaler Arbeitsbedingungen bei der Wärmeübertragung bei.

Fig. 5 zeigt schematisch eine weitere Ausführungsform einer erfindungsgemäßen Wärmeübertrageranordnung 100. Eine andere Art der Volumenänderung der Wärmeübertragerkammern, hier der Hochtemperaturwärmeübertragerkammer 120, erfolgt durch eine Flüssigkeitssteuerung 173 und ist mit der veränderlichen Befüllung eines Teils der Hochtemperaturwärmeübertragerkammer 120 mit einer geeigneten Steuerflüssigkeit 174, z. B. Thermoöl, realisierbar. Ein Steuerflüssigkeitsreservoir 176, ein Vorratsbehälter für die Steuerflüssigkeit 174, ist über eine Steuerleitung 177 und ein Ventil mit der Hochtemperaturwärmeübertragerkammer 120 verbunden. In der Hochtemperaturwärmeübertragerkammer 120 ist vorteilhafter Weise ein Steuervolumen 178 eingerichtet, in dem sich die Steuerflüssigkeit 174 sammeln kann, um das für das Arbeitsmedium 102 nutzbare Volumen der Hochtemperaturwärmeübertragerkammer 120 zu ändern.

Fig. 6 zeigt schematisch eine weitere Ausführungsform einer erfindungsgemäßen Wärmeübertrageranordnung 100. Demnach erfolgt die Volumeneinstellung der Hochtemperaturwärmeübertragerkammer 120 durch ein modulares Baukastenprinzip, das ein flexibles Zusammenschalten mehrerer, auswechselbarer und ergänzbarer Steuerkammern 181 mit Hilfe von darin angeordneten Steuerklappen 182 und/oder Ventilen ermöglicht. Die Steuerkammern 181 umfassen in der dargestellten Ausführungsform jeweils einen Hochtemperaturwärmeübertrager 122, bevorzugt ausgeführt als Rohr-in-Rohr-Wärmeübertrager. Mit Hilfe von zwei Steuerklappen 182, die geeignet sind, jede der Steuerkammern 181 zu öffnen und zu verschließen, wird eine Zirkulation von einer Steuerkammer 181 zur nächsten ermöglicht.

Fig. 7 zeigt schematisch eine weitere Ausführungsform einer erfindungsgemäßen Wärmeübertrageranordnung 100. Strömungseinrichtungen 142, z. B. Lüfter, wirken mit wenigstens einem der Arbeitsmediumdurchlässe 114, 124 zusammen, sodass der Austausch des Arbeitsmediums 102 zwischen einer der Wärmeübertragerkammern 110, 120 und dem Arbeitsraum 210 beschleunigt werden kann. In der Darstellung ist der Arbeitsmediumdurchlass 124 geöffnet, während der Arbeitsmediumdurchlass 114 durch die Stellung des Drehschiebers 220 verschlossen, zumindest strömungshindernd abgeschattet ist.

Fig. 8 zeigt schematisch eine weitere Ausführungsform einer erfindungsgemäßen Wärmeübertrageranordnung 100, bei der ein Zirkulationsverdichter 142 oder eine andere Strömungseinrichtung in die Zirkulationsleitung 140 eingefügt ist, sodass nicht für jeden der Arbeitsmediumdurchlässe 114, 124 eine gesonderte Strömungseinrichtung 142 notwendig ist. Mit Hilfe des Zirkulationsverdichters 142 kann der Austausch des Arbeitsmediums 102 zwischen einer der Wärmeübertragerkammern 110, 120 und dem Arbeitsraum 210 beschleunigt werden, so dass die Zyklusdauer des Kreisprozesses verkürzt werden kann.

Außerdem ist die Wärmeübertrageranordnung 100 nach der dargestellten Ausführungsform besonders kompakt gebaut. Auf eine Kammerbrücke wird verzichtet. Stattdessen sind die Kammern 110, 120 nur durch eine Trennwand 127 voneinander getrennt, wobei ein Durchbruch in der Trennwand 127 die Verbindung der Kammern 110, 120 bildet und in diesen Bereich die Zirkulationsleitung 140 mündet.

Fig. 9 zeigt schematisch in Schnittdarstellung eine weitere Ausführungsform einer erfindungsgemäßen Wärmeübertrageranordnung 100, die sich durch eine besonders kompakte Bauweise auszeichnet und bei der alle für eine effektive Zirkulation notwendigen Elemente im Inneren untergebracht sind. Die Kammern 110, 120 sind durch eine Kanaltrennwand 128 voneinander getrennt, die neben ihrer Trennwirkung zugleich die Aufgabe der Zirkulationsleitung übernimmt. Hierzu ist im Inneren der Kanaltrennwand 128 ein Wandkanal 129 vorgesehen, durch den das Arbeitsmedium 102 vom Arbeitsraum 210 zu wenigstens einer der Wärmeübertragerkammern 110, 120 und zurück zirkulierend strömen kann, wobei der Gegenstrom jeweils über wenigstens eine der mittels des Drehschiebers 220 oder einer anderen Schließvorrichtung steuerbaren Öffnungen 114, 124 erfolgt.

Die gemäß Fig. 9 vorgesehene Strömungseinrichtung 142 ist ebenfalls in die Kanaltrennwand 128 integriert, so dass die Kanaltrennwand 128 in der bevorzugten Ausführungsform den Zirkulationsverdichter, eine Ausführungsform der Strömungseinrichtung 142, aufnimmt. Dieser sorgt für eine verbesserte Zirkulation zwischen den Kammern, wie zuvor bereits dargestellt. Die Strömungsrichtung ist durch Pfeile gekennzeichnet.

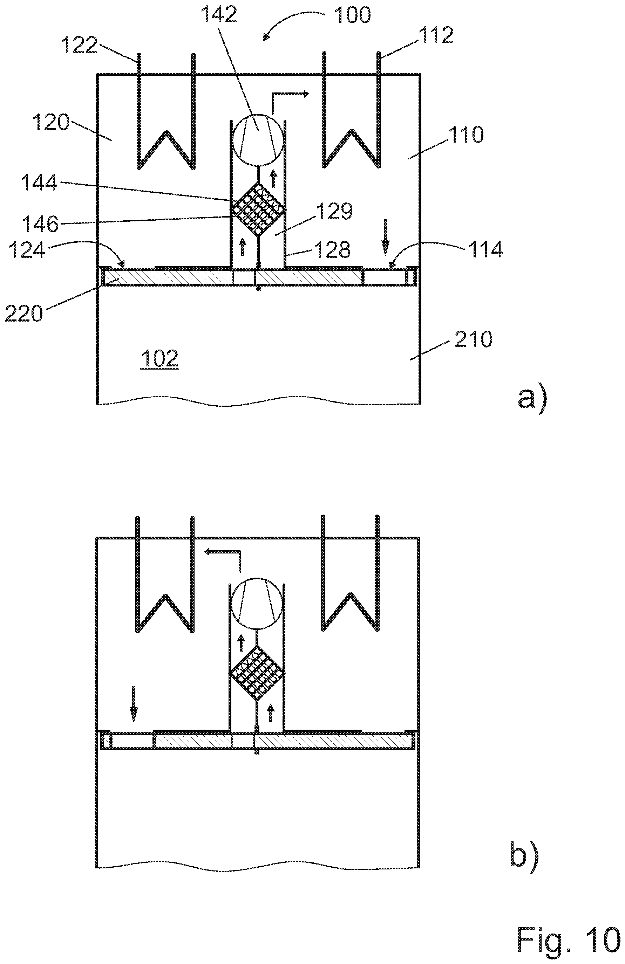

Fig. 10 zeigt schematisch in Schnittdarstellung eine weitere Ausführungsform einer erfindungsgemäßen Wärmeübertrageranordnung 100, bei der ebenfalls alle für eine effektive Zirkulation notwendigen Elemente im Inneren untergebracht sind. Die Kammern 110, 120 sind durch eine Kanaltrennwand 128 voneinander getrennt, die neben ihrer Trennwirkung zugleich die Aufgabe der Zirkulationsleitung übernimmt. Hierzu sind im Inneren der Kanaltrennwand 128 Wandkanäle 129 vorgesehen, durch die das Arbeitsmedium 102 vom Arbeitsraum 210 zu wenigstens einer der Wärmeübertragerkammern 110, 120 strömen kann, wobei der Gegenstrom jeweils über wenigstens eine der mittels des Drehschiebers 220 oder einer anderen Schließvorrichtung steuerbaren Öffnungen 114, 124 in den Arbeitsraum zurück zirkuliert.

Außerdem weist die Kanaltrennwand 128 einen Regenerator 144 auf, der als ein Wärmeübertrager fungiert und Wärme aus dem hindurchströmenden Arbeitsmedium 102 aufnehmen oder an dieses abgeben kann. Diese Fähigkeit wird durch eine wärmespeichernde Füllmasse 146 ermöglicht oder verbessert, die bei einer bevorzugten Ausführungsform des Regenerators 144 in diesem enthalten ist. Soll das Arbeitsmedium 102 abgekühlt werden, nimmt die Füllmasse 146 Wärme auf, die dann an das Arbeitsmedium 102 wieder abgegeben werden kann, wenn dieses erwärmt werden soll. Dadurch müssen Erwärmung und Abkühlung nicht vollständig durch die externen Wärme- und Kältequellen erfolgen, sondern es wird externe Energie gespart und damit die Effizienz des Energiewandlers erhöht.

Die Strömungseinrichtung 142 ist ebenfalls in die Kanaltrennwand 128 integriert, so dass die Kanaltrennwand 128 in der bevorzugten Ausführungsform den Zirkulationsverdichter 142 aufnimmt. Dieser sorgt für eine verbesserte Zirkulation zwischen den Kammern, wie zuvor bereits dargestellt.

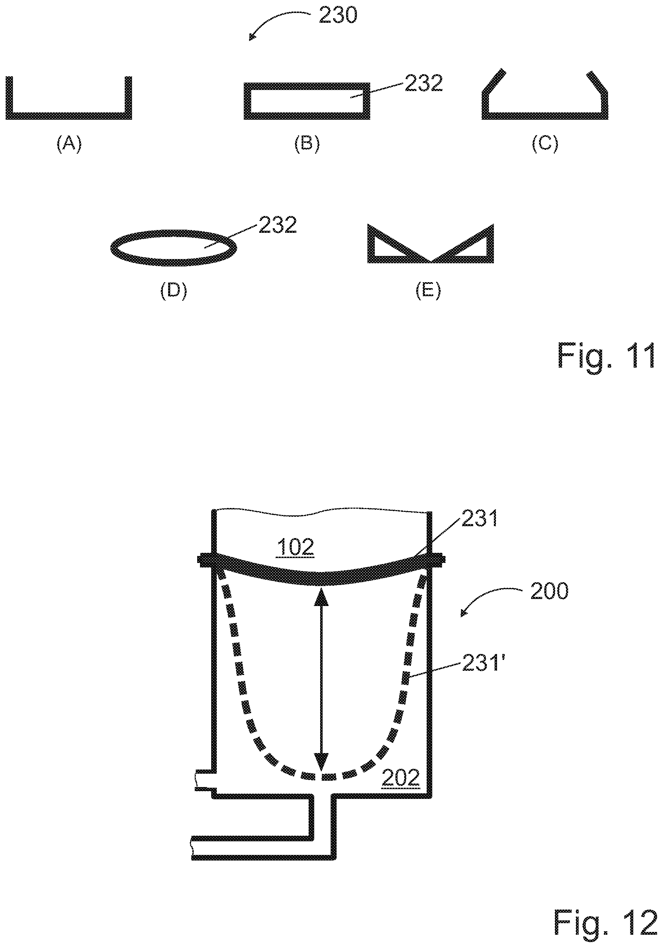

In der bevorzugten Ausführungsform kommt der Regenerator 144 ohne bewegliche Elemente aus, die den Strom des Arbeitsmediums 102 leiten. Stattdessen sind zwei unterschiedliche Strömungspfade für Abkühlung und Erwärmung vorgesehen, die durch die Wandkanäle 129 gebildet und mittels des vorhandenen Drehschiebers 220 angesteuert werden. Die Vorgänge Abkühlung und Erwärmung sind jeweils in den Abbildungen a) und b) der Fig. 11 dargestellt, wobei Pfeile die Strömungsrichtung angeben. Gemäß Abbildung a) wird das warme Arbeitsmedium 102 aus dem Arbeitsraum 210 in den Wandkanal 129 und über den Regenerator 144 geführt, wo es Wärme abgibt und gekühlt in die Niedertemperaturwärmeübertragerkammer 110 einströmt, um dort weiter abgekühlt zu werden. Gemäß Abbildung b) hingegen strömt kühles Arbeitsmedium 102 aus dem Arbeitsraum 210 zur Hochtemperaturwärmeübertragerkammer 120 hin. Auf dem Weg wird es an dem mit Wärme beladenen Regenerator 144 vorbeigeführt, wobei die wärmespeichernde Füllmasse 146 die zuvor aufgenommene Wärme nun an das Arbeitsmedium 102 abgibt. In der Folge ist weniger Energie aus dem Hochtemperaturwärmeübertrager 122 erforderlich, um das Arbeitsmedium 102 zu erwärmen.

Fig. 11 zeigt schematisch in Schnittdarstellung fünf Ausführungsformen eines Trennelements 230 eines erfindungsgemäßen thermodynamischen Energiewandlers. Das u. a. in Fig. 1 in der Arbeitskammer 200 zwischen dem Arbeitsmedium 102 und dem Verdrängerfluid 202 dargestellte, frei bewegliche isolierte Trennelement 230 weist bevorzugt eine geringe Masse bei hoher Festigkeit auf. Mit den dargestellten Formen A, B, C, D und E werden die Trennbedingungen bei gleicher Masse verbessert, insbesondere durch eine höhere Dichtheit zur Innenwand der Arbeitskammer 200.

Die Form A weist zum Arbeitsraum hin umgelegte Ränder auf, die neben höherer Dichtheit auch ein Verkanten verhindern. Die Form B weist dieselben Vorteile wie die Form A auf und verfügt zudem über einen abgeschlossenen Innenraum. Die Form C weist dieselben Vorteile wie die Form A auf und zeichnet sich durch eine verbesserte Sicherheit gegen Verkanten aus. Die Form D verfügt über einen abgeschlossenen Innenraum, verzeichnet zudem durch eine Linienberührung mit der Innenmantelfläche der Arbeitskammer bei guter Dichtwirkung eine geringe Neigung zum Klemmen. Die Form E zeigt eine Verdickung im Randbereich auf. Zumindest die Formen B und D, aber auch die Form E im Randbereich, enthalten abgeschlossene Räume für die Aufnahme eines thermischen Isolationsmaterials, einer Isolierung 232.

Eine alternative Ausführungsform sieht vor, dass das Trennelement 230 selbst aus einem isolierenden Material bestehen kann, sodass die Isolierung 232 einstückig mit dem Trennelement 230 verbunden ist und letzteres ausbildet.

Fig. 12 zeigt schematisch in Schnittdarstellung eine weitere Ausführungsform einer Arbeitskammer 200 einer erfindungsgemäßen Wärmeübertrageranordnung. Die thermische Isolation zwischen dem Arbeitsmedium 102 und dem Verdrängerfluid 202 wird durch ein elastisches Trennelement 231 gewährleistet, das bevorzugt am inneren Randbereich der Arbeitskammer 200 fluiddicht fixiert ist. Je nach Volumen des Arbeitsmediums 102 dehnt sich das elastische Trennelement 231 mehr oder minder in Richtung des Verdrängerfluids 202 aus (Trennelement 231' in ausgelenkter Position, als Strichellinie dargestellt) und verdrängt dieses aus der Arbeitskammer. Beim umgekehrten Vorgang zieht sich das elastische Trennelement 231 wieder zusammen.

Das elastische Trennelement 231 kann neben der thermischen Isolation auch eine hohe Dichtheit gewährleisten, so dass chemische Wechselwirkungen und ein Verdampfen von Verdrängerfluid 202 in das Arbeitsmedium 102 ebenso sicher vermieden wird, wie eine Lösung von Arbeitsmedium 102 in dem Verdrängerfluid 202.

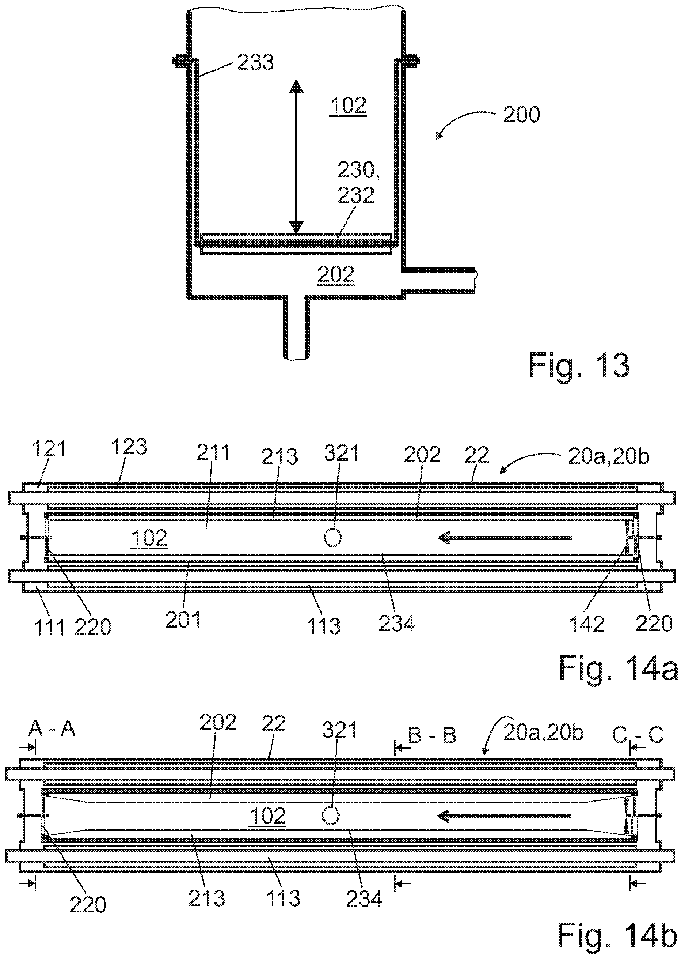

Fig. 13 zeigt schematisch in Schnittdarstellung eine weitere Ausführungsform einer Arbeitskammer 200 einer erfindungsgemäßen Wärmeübertrageranordnung, die eine Kombination der Ausführungsform mit elastischem Trennelement 231 (vgl. Fig. 12) und dem beweglichen Trennelement 230 (vgl. Fig. 11) mit Isolierung darstellt. Dabei ist eine elastische Membran 233 am inneren Randbereich der Arbeitskammer 200 fluiddicht fixiert und gewährleistet eine hohe Dichtheit, so dass chemische Wechselwirkungen und ein Verdampfen von Verdrängerfluid 202 in das Arbeitsmedium 102 ebenso sicher vermieden wird wie eine Lösung von Arbeitsmedium 102 in dem Verdrängerfluid 202. Für die thermische Isolation ist hingegen die Isolierung 232 vorgesehen, die das mit der Membran 233 verbundene Trennelement 230 aufweist und das nicht bis zur Wand der Arbeitskammer 200 reichen muss. Deshalb kann sich die Isolierung 232 leichtgängig und reibungsarm in der Arbeitskammer 200 bewegen. Eine alternative Ausgestaltung verzichtet auf die Isolierung 232, da die elastische Membran 233 so ausgeführt ist, dass sie selbst isolierend wirkt.

Die Figuren 14a und 14b zeigen schematisch in Längsschnittdarstellung eine weitere Ausführungsform des Gleichdruckmehrkammerbehälters 20a, 20b zum Einsatz in dem erfindungsgemäßen Energiewandler. Der gesamte Aufbau der Komponenten des Gleichdruckmehrkammerbehälters 20a, 20b erfolgt im Wesentlichen konzentrisch, wobei ein Hüllrohr 22 die äußere Begrenzung bildet. In dem Hüllrohr 22 sind die Hochtemperaturwärmeübertragerkammer 121 mit dem Hochtemperaturwärmeübertrager 123 und die Niedertemperaturwärmeübertragerkammer 111 mit dem Niedertemperaturwärmeübertrager 113, jeweils in langestreckter Ausgestaltung ausgeführt. Dadurch ist eine große Wärmeübertragerfläche bei geringem Raumbedarf nutzbar.

Das Zentrum des Gleichdruckmehrkammerbehälters 20a, 20b wird durch die Arbeitskammer 201 mit dem Arbeitsraum 211 und dem Kraftübertragungsraum 213 eingenommen. Arbeitsraum 211 und Kraftübertragungsraum 213 sind durch den Trennschlauch 234 voneinander getrennt. Über den Trennschlauch 234 wird der Druck des Arbeitsmediums 102 auf das Verdrängerfluid 202 übertragen, das über die Hauptleitung 321 den Gleichdruckmehrkammerbehälter 20a, 20b verlassen oder in diesen eintreten kann.

Zur Steuerung und Beschleunigung des Transports des Arbeitsmediums 102 über die Wärmeübertrager 113, 123 sind an beiden Enden der rohrförmigen Arbeitskammer 201 ein Drehschieber 220 und an einem Ende der Arbeitskammer 201 ein Lüfter 142 vorgesehen. Ein Pfeil zeigt die Durchströmungsrichtung an.

Kühlt sich das Arbeitsmedium 102 aus der Darstellung in Fig. 14a über dem Niedertemperaturwärmeübertrager 113 ab, verringert sich dessen Volumen in dem Arbeitsraum 211. Dadurch vergrößert sich das Volumen des Kraftübertragungsraums 213, Verdrängerfluid 202 strömt über die Hauptleitung 321 ein, wie in Fig. 14b dargestellt.

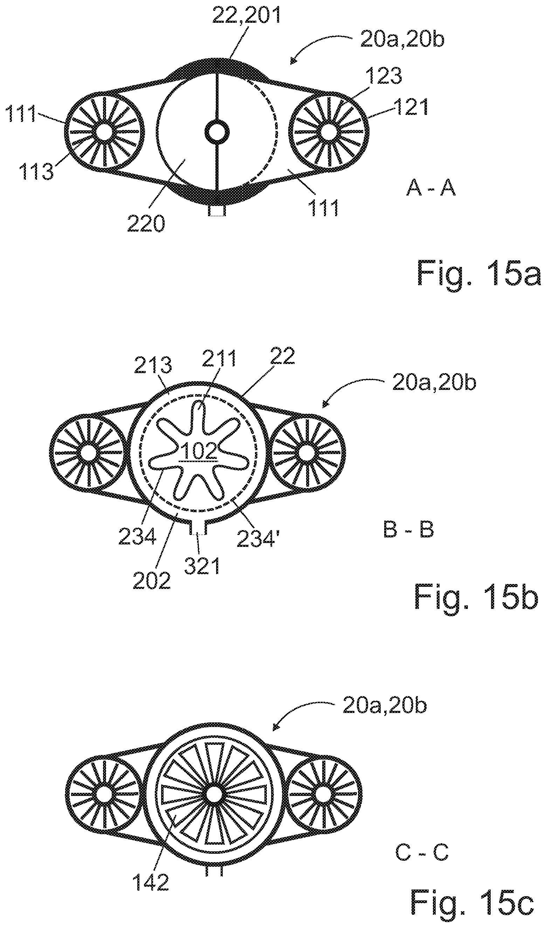

Die Figuren 15a bis 15c zeigen schematisch in Querschnittdarstellung eine weitere Ausführungsform des rohrförmigen Gleichdruckmehrkammerbehälters 20a, 20b, wobei die Schnittebenen A-A, B-B und C-C in Fig. 14b angegeben sind. Das zylindrische Hüllrohr 22 beherbergt hierbei nur die Arbeitskammer 201, während die Hochtemperaturwärmeübertragerkammer 121 mit dem Hochtemperaturwärmeübertrager 123 und die Niedertemperaturwärmeübertragerkammer 111 mit dem Niedertemperaturwärmeübertrager 113 außen an das Hüllrohr 22 angesetzt sind. Der Drehschieber 220 ist im Schnitt A-A in geöffneter Stellung gezeigt.

Über den Anschluss für die Hauptleitung 321 tritt das Verdrängerfluid 202 in den Kraftübertragungsraum 213, wie Fig. 15b in der Schnittebene B-B zeigt, ein. Der Querschnitt zeigt auch den Trennschlauch 234 bei geringem Druck des Arbeitsmediums 102 bzw. Volumen des Arbeitsraums 211, während das maximale Volumen des Arbeitsraums 211 und zugleich das minimale Volumen des Kraftübertragungsraums 213 in gestrichelter Darstellung des Trennschlauchs 234' angegeben ist. Die Schnittebene C-C nach Fig. 15c zeigt den Lüfter 142.

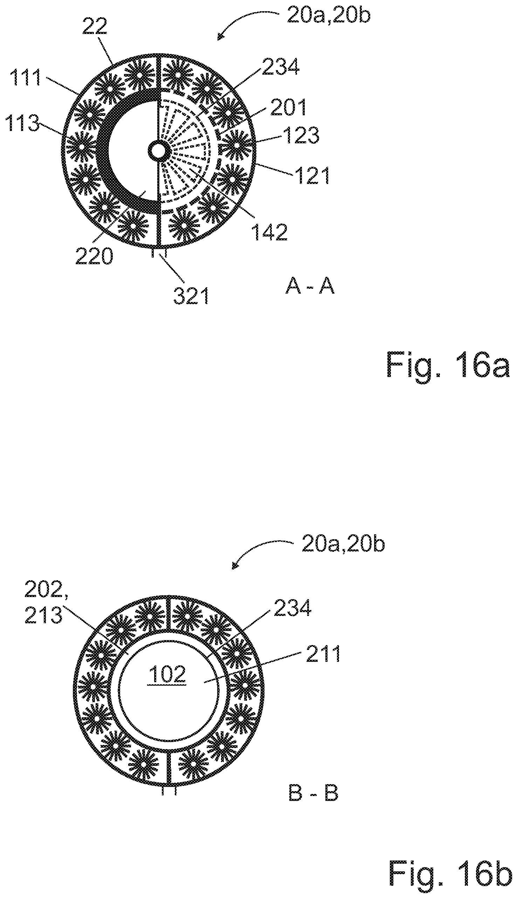

Auch die Figuren 16a und 16b zeigen die Schnittebenen A-A und B-B aus der Fig. 14b, zeigen jedoch schematisch in Querschnittdarstellung eine weitere Ausführungsform des rohrförmigen Gleichdruckmehrkammerbehälters 20a, 20b in vollständig zylindrischer Ausführungsform. Das Hüllrohr 22 umschließt daher nicht nur die die Arbeitskammer 201, sondern auch die die Hochtemperaturwärmeübertragerkammer 121 mit dem Hochtemperaturwärmeübertrager 123 und die Niedertemperaturwärmeübertragerkammer 111 mit dem Niedertemperaturwärmeübertrager 113. Es sind mehrere Wärmeübertrager 113, 123 kleineren Durchmessers vorgesehen, sodass diese in den schmalen Zwischenraum zwischen Arbeitskammer 201 und Hüllrohr 22 passen und dennoch eine ausreichend große Wärmeübertragerfläche bieten. Der Schnitt A-A in Fig. 16a zeigt zudem den Drehschieber 220 sowie verdeckt, dargestellt durch gestrichelte Linien, den Lüfter 142 und den Trennschlauch 234. Zudem ist das Anschluss für die Hauptleitung 321 erkennbar.

Der Schnitt B-B, den Fig. 16b zeigt, lässt den Trennschlauch 234 erkennen, in dessen Innerem sich der Arbeitsraum 211 mit dem Arbeitsmedium 102 befindet. Außerhalb des den Trennschlauchs 234 erstreckt sich der Kraftübertragungsraum 213 mit dem Verdrängerfluid 202.

**Bezugszeichenliste**

| | |
|---|---|
| 1 | Energiewandler |
| 10a, 10b | Gleichdruckmehrkammerbehälter |
| 20a, 20b | Gleichdruckmehrkammerbehälter |
| 100 | Wärmeübertrageranordnung |
| 22 | Hüllrohr |
| | |
| 102 | Arbeitsmedium |
| 110, 111 | Wärmeübertragerkammer, Niedertemperaturwärmeübertragerkammer, (Kammer) |
| 112, 113 | Wärmeübertrager, Niedertemperaturwärmeübertrager |
| 114 | Öffnung, Arbeitsmediumdurchlass |
| 142 | Strömungseinrichtung |
| 120, 121 | Wärmeübertragerkammer, Hochtemperaturwärmeübertragerkammer, (Kammer) |
| 122, 123 | Wärmeübertrager, Hochtemperaturwärmeübertrager |
| 124 | Öffnung, Arbeitsmediumdurchlass |
| 127 | Trennwand |
| 128 | Kanaltrennwand |
| 129 | Wandkanal |
| 130 | Kammerbrücke |
| 140 | Zirkulationsleitung |
| 142 | Strömungseinrichtung, Zirkulationsverdichter, Lüfter |
| 144 | Regenerator |
| 146 | Füllmasse |
| 150 | Stellkolbenanordnung |
| 152 | Stellkolben |
| 153 | Zylinderelement |
| 154 | Kolbenstange |
| 160 | Stellkolbenanordnung |
| 162 | Stellkolben |
| 163 | Zylinderelement |
| 164 | Kolbenstange |
| 171 | Steuerkammer |
| 172 | Steuerklappe |
| 173 | Flüssigkeitssteuerung |
| 174 | Steuerflüssigkeit |
| 176 | Steuerflüssigkeitsreservoir |
| 177 | Steuerleitung |
| 178 | Steuervolumen |
| 181 | Steuerkammer |
| 182 | Steuerklappe |
| | |
| 200, 201 | Arbeitskammer, (Kammer) |
| 202 | Verdrängerfluid |
| 210, 211 | Arbeitsraum |
| 212, 213 | Kraftübertragungsraum |
| 220 | Schließvorrichtung, Drehschieber |
| | |
| 230 | Trennelement, beweglich |
| 231, 231' | Trennelement, elastisch |
| 232 | Isolierung des Trennelements |
| 233 | Trennelement, Membran |
| 234, 234' | Trennelement, Trennschlauch |
| 240 | Bypassleitung |
| 250 | Ventil |
| | |
| 300 | Fluidenergieumformeranordnung |
| 310 | Fluidenergieumformer |
| 320 | Ventilanordnung |
| 321 | Hauptleitung |

**Patentansprüche**

1. Volumenelement (10a, 10b, 20a, 20b) zum Einschließen eines Arbeitsmediums (102) innerhalb eines in der Größe veränderlichen inneren Volumens, aufweisend eine das innere Volumen in Wärmeübertragerkammern (110, 111, 120, 121) sowie eine Arbeitskammer (200, 201) unterteilende Wandung, wobei

- innerhalb der Arbeitskammer (200, 201) ein die Arbeitskammer (200, 201) in einen mit dem Arbeitsmedium (201) beaufschlagten Arbeitsraum (210, 211) und einen mit einem Verdrängerfluid (202) beaufschlagten Kraftübertragungsraum (212, 213) unterteilendes Trennelement (230, 231, 233, 234) ausgebildet ist,
- die Wärmeübertragerkammern (110, 111, 120, 121) und der Arbeitsraum (210, 211) untereinander fluidtechnisch derart miteinander verbunden ausgebildet sind, dass das Arbeitsmedium (102) innerhalb des Volumenelements (10a, 10b, 20a, 20b) den gleichen Druck aufweist sowie
- jede Wärmeübertragerkammer (110, 111, 120, 121) über einen Einlass und einen getrennt vom Einlass ausgebildeten Auslass mit dem Arbeitsraum (210, 211) verbunden ist,

**dadurch gekennzeichnet, dass** jeweils ein Einlass oder ein Auslass als Verbindung zwischen den Wärmeübertragerkammern (110, 111, 120, 121) und dem Arbeitsraum (210, 211) mit mindestens einer Vorrichtung (220) zum Beeinflussen der Durchströmung der Wärmeübertragerkammern (110, 111, 120, 121) mit Arbeitsmedium (102) derart ausgebildet ist, eine Durchströmung mindestens einer der Wärmeübertragerkammern (110, 111, 120, 121) zu verhindern sowie eine Durchströmung mindestens einer anderen Wärmeübertragerkammer (110, 111, 120, 121) zu fördern.

2. Volumenelement (10a, 10b, 20a, 20b) nach Anspruch 1, wobei im Einlass der Wärmeübertragerkammern (110, 111, 120, 121) ein Regenerator (144) zum Speichern von Wärme derart angeordnet ist, dass das Arbeitsmedium (102) beim Einströmen in die erste Wärmeübertragerkammer (110, 111) aufgeladen wird und beim Einströmen in die zweite Wärmeübertragerkammer (120, 121) entladen wird.

3. Volumenelement (10a, 10b) nach Anspruch 1 oder 2, wobei das Trennelement (230) fluiddicht und mit einer größeren Auftriebskraft als Gewichtskraft derart ausgebildet ist, dass das Trennelement (230) stets auf der Oberfläche des Verdrängerfluids aufliegt und/oder das Trennelement (230) mit einer thermischen Isolierung oder aus einem thermischen Isolationsmaterial ausgebildet ist und/oder das Trennelement (230)

- als eine den Querschnitt der Arbeitskammer (200) verschließende Scheibe mit einem in Richtung des Arbeitsraums (210) ausgerichteten Rand oder
- als ein den Querschnitt der Arbeitskammer (200)
- verschließender Hohlzylinder oder
- als ein den Querschnitt der Arbeitskammer (200) verschließendes Rotationsellipsoid

ausgebildet ist.

4. Volumenelement (20) nach einem der Ansprüche 1 bis 3, dessen Arbeitskammer (201) rohrförmig ausgebildet ist und in ihrem Inneren koaxial angeordnet den Kraftübertragungraum (213) und den Arbeitsraum (211) aufweist, die durch das als ein Trennschlauch (234) ausgebildete Trennelement im Querschnitt voneinander getrennt sind, wobei der Trennschlauch (234) elastisch ausgebildet ist, und wobei die Wärmeübertragerkammern (111, 121) am Umfang der Arbeitskammer (201) angeordnet sind und an den Stirnseiten der Arbeitskammer (201) jeweils ein Einlass oder ein Auslass als Verbindung zwischen den Wärmeübertragerkammern (111, 121) und dem Arbeitsraum (211) vorgesehen ist und mindestens ein Einlass oder ein Auslass mit einer Vorrichtung (220) zum Beeinflussen der Durchströmung der Wärmeübertragerkammern (111, 121) mit Arbeitsmedium (102) derart ausgebildet ist, dass eine Durchströmung mindestens einer der Wärmeübertragerkammern (111, 121) verhindert sowie eine Durchströmung mindestens einer anderen Wärmeübertragerkammer (111, 121) gefördert wird.

5. Volumenelement (20) nach Anspruch 4, wobei an wenigstens einem Ende der Arbeitskammer (201) eine Vorrichtung (142) zum Fördern der Durchströmung vorgesehen ist.

6. Vorrichtung (1) zum Umwandeln von thermischer, mechanischer und innerer Energie ineinander, aufweisend mindestens zwei Volumenelemente (10a, 10b, 20a, 20b) nach einem der Ansprüche 1 bis 5 sowie mindestens eine Anordnung (300) zum Umformen von kinetischer Energie eines Fluids in mechanische Energie, wobei

- innerhalb einer ersten Wärmeübertragerkammer (110, 111) mindestens ein Niedertemperaturwärmeübertrager (112, 113) zum Abkühlen des Arbeitsmediums und innerhalb einer zweiten Wärmeübertragerkammer (120, 121) mindestens ein Hochtemperaturwärmeübertrager (122, 123) zum Erwärmen des Arbeitsmediums (102) angeordnet ist und
- die Volumenelemente (10a, 10b, 20a, 20b) in Bereichen der mit dem Verdrängerfluid beaufschlagten Kraftübertragungsräume (212, 213) über eine Verbindungsleitung (321) hydraulisch miteinander verbunden sind, wobei die Anordnung (300) zum Umformen der kinetischen Energie des Fluids innerhalb der Verbindungsleitung (321) ausgebildet ist.

7. Vorrichtung (1) nach Anspruch 6, wobei mindestens eine der Wärmeübertragerkammern (110, 111, 120, 121) in Unterkammern unterteilt ausgebildet ist, wobei in jeder Unterkammer entsprechend ein Niedertemperaturwärmeübertrager (112, 113) oder ein Hochtemperaturwärmeübertrager (122, 123) angeordnet ist und die Unterkammern fluidtechnisch miteinander verbunden sind.

8. Vorrichtung (1) nach Anspruch 7, wobei an einer zwischen zwei Unterkammern ausgebildeten Öffnung eine Vorrichtung (220) zum Verhindern einer Durchströmung oder eine Vorrichtung (142) zum Fördern der Durchströmung ausgebildet ist.

9. Vorrichtung (1) nach einem der Ansprüche 6 bis 8, wobei mindestens eine der Wärmeübertragerkammern (110, 111, 120, 121) mit einem veränderbaren inneren Volumen ausgebildet ist.

10. Vorrichtung (1) nach Anspruch 6, wobei die Wärmeübertragerkammer (110, 111, 120, 121)

- aus mindestens zwei zueinander verschließbaren Unterkammern und/oder
- mit einem zur Wandung der Wärmeübertragerkammer (110, 111, 120, 121) fluiddichten und beweglichen Kolben und/oder
- mit einem niveauveränderlichen Fluid gefüllt ausgebildet ist.

11. Vorrichtung (1) nach einem der Ansprüche 6 bis 10, wobei die Anordnung (300) zum Umformen von Fluidenergie aus mindestens einem rotatorisch wirkenden Fluidmotor oder aus mindestens einem Linearmotor ausgebildet ist und die Anordnung (300) zum Umformen von Fluidenergie eine Ventilanordnung (320) aufweist.

12. Vorrichtung (1) nach einem der Ansprüche 6 bis 11, wobei die Volumenelemente (10a, 10b, 20a, 20b) in Bereichen der mit dem Verdrängerfluid (202) beaufschlagten Kraftübertragungsräume (212, 213) über eine Bypassleitung (240) hydraulisch miteinander verbunden sind, wobei die Bypassleitung (240) ein Ventil (250) zum Öffnen und Schließen des Strömungsquerschnitts aufweist.

13. Verfahren zum Betreiben der Vorrichtung (1) nach einem der Ansprüche 6 bis 12, aufweisend folgende Schritte:

a) Abkühlen eines gasförmigen Arbeitsmediums innerhalb einer ersten Wärmeübertragerkammer (110, 111) und Erwärmen des gasförmigen Arbeitsmediums innerhalb einer zweiten Wärmeübertragerkammer (120, 121) jeweils eines ersten Volumenelements (10a, 20a) und eines zweiten Volumenelements (10b, 20b), wobei jeweils eine Vorrichtung (220) zum Beeinflussen der Durchströmung der Wärmeübertragerkammern (110, 111) derart eingestellt ist, dass

- das Arbeitsmedium im ersten Volumenelement (10a, 20a) zwischen der zweiten Wärmeübertragerkammer (120, 121) und einem Arbeitsraum (210, 211) zirkuliert und erwärmt wird, wobei bei konstantem inneren Volumen der Druck des Arbeitsmediums (102) erhöht wird, sowie
- das Arbeitsmedium (102) im zweiten Volumenelement (10b, 20b) zwischen der ersten Wärmeübertragerkammer (110, 111) und einem Arbeitsraum (210, 211) zirkuliert und abgekühlt wird, wobei bei konstantem inneren Volumen der Druck des Arbeitsmediums (102) verringert wird, und
- Ausbilden eines Druckunterschieds zwischen den innerhalb der Volumenelemente (10a, 10b, 20a, 20b) eingeschlossenen Arbeitsmedien (102),

b) Öffnen einer Verbindungsleitung (321) und Verbinden von mit einem Verdrängerfluid (202) beaufschlagten Kraftübertragungsräumen (212, 213) der Volumenelemente (10a, 10b, 20a, 20b),
c) Expandieren des Arbeitsmediums (102) innerhalb des ersten Volumenelements (10a, 20a) sowie Verdichten des Arbeitsmediums (102) innerhalb des zweiten Volumenelements (10b, 20b), wobei

- das Verdrängerfluid (202) vom Kraftübertragungsraum (212, 213) des ersten Volumenelements (10a, 20) in den Kraftübertragungsraum (212, 213) des zweiten Volumenelements (10b, 20b) überströmt sowie
- eine in der Verbindungsleitung (321) ausgebildete Anordnung (300) zum Umformen der Fluidenergie vom Verdrängerfluid (202) beaufschlagt und angetrieben wird,

bis die zwischen den innerhalb der Volumenelemente (10a, 10b, 20a, 20b) eingeschlossenen Arbeitsmedien (202) einen gleichen Druck aufweisen,
d) Einstellen der Vorrichtungen (220, 221) zum Beeinflussen der Durchströmung der Wärmeübertragerkammern (110, 111) derart, dass

- das Arbeitsmedium (102) im ersten Volumenelement (10a, 20a) zwischen der ersten Wärmeübertragerkammer (110, 111) und dem Arbeitsraum (210, 211) zirkuliert und abgekühlt wird, wobei bei konstantem inneren Volumen der Druck des Arbeitsmediums (102) verringert wird, sowie
- das Arbeitsmedium (102) im zweiten Volumenelement (10b) zwischen der zweiten Wärmeübertragerkammer (120, 121) und dem Arbeitsraum (210, 211) zirkuliert und erwärmt wird, wobei bei konstantem inneren Volumen der Druck des Arbeitsmediums (102) erhöht wird, und
- Ausbilden eines Druckunterschieds zwischen den innerhalb der Volumenelemente (10a, 10b, 20a, 20b) eingeschlossenen Arbeitsmedien (102),

e) Öffnen der Verbindungsleitung (321) und Verbinden der mit dem Verdrängerfluid (102) beaufschlagten Kraftübertragungsräume (212, 213) der Volumenelemente (10a, 10b, 20a, 20b),
f) Expandieren des Arbeitsmediums (102) innerhalb des zweiten Volumenelements (10b, 20b) sowie Verdichten des Arbeitsmediums (102) innerhalb des ersten Volumenelements (10a, 20a), wobei

- das Verdrängerfluid (202) vom Kraftübertragungsraum (212, 213) des zweiten Volumenelements (10b, 20b) in den Kraftübertragungsraum (212, 213) des ersten Volumenelements (10a, 20a) überströmt sowie
- die in der Verbindungsleitung (321) ausgebildete Anordnung (300) zum Umformen der Fluidenergie vom Verdrängerfluid (202) beaufschlagt und angetrieben wird,

bis die zwischen den innerhalb der Volumenelemente (10a, 10b, 20a, 20b) eingeschlossenen Arbeitsmedien (102) einen gleichen Druck aufweisen;
wobei die kinetische Energie des Verdrängerfluids (202) in mechanische Energie umgewandelt wird.

14. Verfahren nach Anspruch 13, wobei das Arbeitsmedium (102) zum Abkühlen innerhalb der ersten Wärmeübertragerkammer (110, 111) über mindestens einen Niedertemperaturwärmeübertrager (112, 113) strömt, welcher mit einem ersten Wärmeträger beaufschlagt ist und dass das Arbeitsmedium (102) zum Erwärmen innerhalb der zweiten Wärmeübertragerkammer (120, 121) über mindestens einen Hochtemperaturwärmeübertrager (122, 123) strömt, welcher mit einem zweiten Wärmeträger beaufschlagt ist.

15. Verfahren nach Anspruch 13 oder 14, wobei nachfolgend den Verfahrensschritten c) und/oder f) die Verbindungsleitung (321) geschlossen wird und eine Bypassleitung (240) zum Verbinden der mit dem Verdrängerfluid (202) beaufschlagten Kraftübertragungsräume (212, 213) der Volumenelemente (10a, 10b, 20a, 20b) zum Ausgleichen des Druckes innerhalb der Volumenelemente (10a, 10b, 20a, 20b) geöffnet wird, welche nach dem Ausgleich des Druckes geschlossen wird.

**Claims**

1. A volume element (10a, 10b, 20a, 20b) for enclosing a working medium (102) inside an inner volume of variable size, including a wall that divides the inner volume into heat exchanger compartments (110, 111, 120, 121) and a working compartment (200, 201), wherein

- a partition (230, 231, 233, 234) is formed inside the working compartment (200, 201) which divides the working compartment (200, 201) into a working chamber (210, 211) supplied with the working medium (201) and a force transmission chamber (212, 213) supplied with a displacement fluid (202),
- the heat exchanger compartments (110, 111, 120, 121) and the working chamber (210, 211) are fluidly interconnected such that the working medium (102) inside the volume element (10a, 10b, 20a, 20b) has the same pressure, and
- each heat exchanger compartment (110, 111, 120, 121) is connected to the working chamber (210, 211) via an inlet and an outlet that is formed separately from the inlet,

**characterized in that** a respective inlet or outlet is designed, as a connection between the heat exchanger compartments (110, 111, 120, 121) and the working chamber (210, 211), with at least one device (220) for influencing the flow of working medium (102) through the heat exchanger compartments (110, 111, 120, 121) so as to prevent a flow through at least one of the heat exchanger compartments (110, 111, 120, 121) and to support a flow through at least one other heat exchanger compartment (110, 111, 120, 121).

2. The volume element (10a, 10b, 20a, 20b) according to claim 1, wherein a regenerator (144) for storing heat is arranged in the inlet of the heat exchanger compartments (110, 111, 120, 121) such that the working medium (102) is charged when entering the first heat exchanger compartment (110, 111) and discharged when entering the second heat exchanger compartment (120, 121).

3. The volume element (10a, 10b) according to any one of claim 1 or 2, wherein the partition (230) is designed such that it is fluid-tight and has a buoyancy force that is larger than its weight such that the partition (230) always rests on the surface of the displacement fluid and/or wherein the partition (230) is designed such that it includes a thermal insulator or is formed of a thermal insulation material and/or wherein the partition (230)

- is designed as a disk that closes the cross-sectional area of the working compartment (200) and that has an edge that is oriented towards the working chamber (210) or
- as a hollow cylinder closing the cross-sectional area of the working compartment (200)
- or
- as an ellipsoid of revolution closing the cross-sectional area of the working compartment (200).

4. The volume element (20) according to any one of claims 1 to 6, wherein its working compartment (201) has a tubular design and includes in its interior the force transmission chamber (213) and the working chamber (211), which are arranged coaxially and are separated in cross-section by the partition designed as a separating hose (234), wherein the separating hose (234) is elastic, and wherein the heat exchanger compartments (111, 121) are arranged at the circumference of the working compartment (201), and a respective inlet or outlet is provided at the face ends of the working compartment (201) as a connection between the heat exchanger compartments (111, 121) and the working chamber (211), and at least one inlet or outlet is designed such that it includes a device (220) for influencing the flow of working medium (102) through the heat exchanger compartments (111, 121) such that a flow through at least one of the heat exchanger compartments (110, 120) is prevented and a flow through at least one other heat exchanger compartment (110, 120) is supported.

5. The volume element (20) according to claim 4, wherein a device (142) for supporting the flow is provided on at least one end of the working compartment (201).

6. A device (1) for converting thermal, mechanical and intrinsic energy into one another, including at least two volume elements (10a, 10b, 20a, 20b) according to any one of claims 1 to 5 and at least one assembly (300) for transforming kinetic energy of a fluid into mechanical energy, wherein

- at least one low-temperature heat exchanger (112, 113) for cooling the working medium is arranged inside a first heat exchanger compartment (110, 111) and at least one high-temperature heat exchanger (122, 123) for heating the working medium (102) is arranged inside a second heat exchanger compartment (120, 121) and
- the volume elements (10a, 10b, 20a, 20b) are hydraulically connected via a connection line (321) in regions of the force transmission chambers (212, 213) supplied with the displacement fluid, wherein the assembly (300) for transforming the kinetic energy of the fluid is formed inside the connection line (321).

7. The device (1) according to claim 6, wherein at least one of the heat exchanger compartments (110, 111, 120, 121) is divided into subcompartments, wherein a low-temperature heat exchanger (112, 113) or a high-temperature heat exchanger (122, 123) is accordingly arranged in each subcompartment, and the subcompartments are fluidly interconnected.

8. The device (1) according to claim 7, wherein a device (220) for preventing a flow or a device (142) for supporting the flow is formed at an opening formed between two subcompartments.

9. The device (1) according to any one of claims 6 to 8, wherein at least one of the heat exchanger compartments (110, 111, 120, 121) is designed such that it has a variable inner volume.

10. The device (1) according to claim 6, wherein the heat exchanger compartment (110, 111, 120, 121)

- is formed of at least two subcompartments that can be closed towards one another, and/or
- includes a piston that is fluid-tight towards the wall of the heat exchanger compartment (110, 111, 120, 121) and is movable, and/or
- is filled with a variable-level fluid.

11. The device (1) according to any one of claims 6 to 10, wherein the assembly (300) for transforming fluid energy is formed of at least one rotationally acting fluid motor or at least one linear motor and the assembly (300) for transforming fluid energy includes a valve assembly (320).

12. The device (1) according to any one of claims 6 to 11, wherein the volume elements (10a, 10b, 20a, 20b) are hydraulically connected via a bypass line (240) in regions of the force transmission chambers (212, 213) supplied with the displacement fluid (202), wherein the bypass line (240) includes a valve (250) for opening and closing the cross-sectional flow area.

13. A method for operating the device (1) according to any one of claims 6 to 12, including the following steps:

> a) cooling a gaseous working medium inside a first heat exchanger compartment (110, 111) and heating the gaseous working medium inside a second heat exchanger compartment (120, 121) of each of a first volume element (10a, 20a) and a second volume element (10b, 20b), wherein a respective device (220) for influencing the flow through the heat exchanger compartments (110, 111) is set such that

> > - the working medium in the first volume element (10a, 20a) is circulated between the second heat exchanger compartment (120, 121) and a working chamber (210, 211) and is heated, which increases the pressure of the working medium (102) at a constant inner volume, and
> > - the working medium (102) in the second volume element (10b, 20b) is circulated between the first heat exchanger compartment (110, 111) and a working chamber (210, 211) and is cooled, which decreases the pressure of the working medium (102) at a constant inner volume, and
> > - establishing a pressure difference between the working media (102) enclosed inside the volume elements (10a, 10b, 20a, 20b),

> b) opening a connection line (321) and connecting force transmission chambers (212, 213) of the volume elements (10a, 10b, 20a, 20b), said force transmission chambers being supplied with a displacement fluid (202),
> c) expanding the working medium (102) inside the first volume element (10a, 20a) and compressing the working medium (102) inside the second volume element (10b, 20b), wherein

> > - the displacement fluid (202) flows from the force transmission chamber (212, 213) of the first volume element (10a, 20a) into the force transmission chamber (212, 213) of the second volume element (10b, 20b) and
> > - an assembly (300) for transforming the fluid energy, which is formed in the connection line (321), is supplied with and driven by the displacement fluid (202)

until the working media (202) enclosed inside the volume elements (10a, 10b, 20a, 20b) have a same pressure,
d) adjusting the devices (220, 221) for influencing the flow through the heat exchanger compartments (110, 111) such that

> - the working medium (102) in the first volume element (10a, 20a) is circulated between the first heat exchanger compartment (110, 111) and the working chamber (210, 211) and is cooled, which decreases the pressure of the working medium (102) at a constant inner volume, and
> - the working medium (102) in the second volume element (10b) is circulated between the second heat exchanger compartment (120, 121) and the working chamber (210, 211) and is heated, which increases the pressure of the working medium (102) at a constant inner volume, and
> - establishing a pressure difference between the working media (102) enclosed inside the volume elements (10a, 10b, 20a, 20b),

e) opening the connection line (321) and connecting the force transmission chambers (212, 213) of the volume elements (10a, 10b, 20a, 20b), said force transmission chambers being supplied with the displacement fluid (102),
f) expanding the working medium (102) inside the second volume element (10b, 20b) and compressing the working medium (102) inside the first volume element (10a, 20a), wherein

> - the displacement fluid (202) flows from the force transmission chamber (212, 213) of the second volume element (10b, 20b) into the force transmission chamber (212, 213) of the second volume element (10b, 20b) and
> - the assembly (300) for transforming the fluid energy, which is formed in the connection line (321), is supplied with and driven by the displacement fluid (202)

until the working media (102) enclosed inside the volume elements (10a, 10b, 20a, 20b) have a same pressure, wherein the kinetic energy of the displacement fluid (202) is converted into mechanical energy.

14. The method according to claim 13, wherein, in order to be cooled, the working medium (102) flows over at least one low-temperature heat exchanger (112, 113) inside the first heat exchanger compartment (110, 111), said low-temperature heat exchanger being supplied with a first heat carrier, and that, in order to be heated, the working medium (102) flows over at least one high-temperature heat exchanger (122, 123) inside the second heat exchanger compartment (120, 121), said high-temperature heat exchanger being supplied with a second heat carrier.

**15.** The method according to claim 13 or claim 14, wherein subsequent to the method steps c) and/or f) the connection line (321) is closed and a bypass line (240) is opened to connect the force transmission chambers (212, 213) of the volume elements (10a, 10b, 20a, 20b), which are supplied with the displacement fluid (202), to balance the pressure inside the volume elements (10a, 10b, 20a, 20b), which bypass line is closed after the pressure is balanced.

## Revendications

**1.** Elément de volume (10a, 10b, 20a, 20b) pour l'inclusion d'un fluide actif (102) au sein d'un volume interne de taille variable, présentant une paroi divisant le volume interne en chambres caloporteuses (110, 111, 120, 121) ainsi qu'une chambre de travail (200, 201), dans lequel

- un élément de séparation (230, 231, 233, 234) divisant la chambre de travail (200, 201) en un espace de travail (210, 211) sollicité par le fluide actif (102) et un espace de transmission de force (212, 213) sollicité par un fluide de refoulement (202) est réalisé au sein de la chambre de travail (200, 201),
- les chambres caloporteuses (110, 111, 120, 121) et l'espace de travail (210, 211) sont réalisés de manière connectée les uns aux autres par voie fluidique entre eux de telle sorte que le fluide actif (102) présente la même pression au sein de l'élément de volume (10a, 10b, 20a, 20b), ainsi que
- chaque chambre caloporteuse (110, 111, 120, 121) est connectée à l'espace de travail (210, 211) par le biais d'une entrée et d'une sortie réalisée séparément de l'entrée,

**caractérisé en ce qu'**une entrée ou une sortie est à chaque fois réalisée en tant que connexion entre les chambres caloporteuses (110, 111, 120, 121) et l'espace de travail (210, 211) avec au moins un dispositif (220) pour l'influence de la traversée des chambres caloporteuses (110, 111, 120, 121) avec du fluide actif (102) de manière à empêcher une traversée d'au moins une des chambres caloporteuses (110, 111, 120, 121) et à favoriser une traversée d'au moins une autre chambre caloporteuse (110, 111, 120, 121).

**2.** Elément de volume (10a, 10b, 20a, 20b) selon la revendication 1, dans lequel un régénérateur (144) est disposé dans l'entrée des chambres caloporteuses (110, 111, 120, 121) pour l'accumulation de chaleur de telle sorte que le fluide actif (102) est chargé lors de l'afflux dans la première chambre caloporteuse (110, 111) et est déchargé lors de l'afflux dans la seconde chambre caloporteuse (120, 121).

**3.** Elément de volume (10a, 10b) selon la revendication 1 ou 2, dans lequel l'élément de séparation (230) est réalisé de manière étanche au fluide et avec une force portante supérieure au poids de telle sorte que l'élément de séparation (230) repose toujours à la surface du fluide de refoulement et/ou l'élément de séparation (230) est réalisé avec une isolation thermique ou en un matériau d'isolation thermique et/ou l'élément de séparation (230) est réalisé

- en tant que disque fermant la section transversale de la chambre de travail (200) avec un bord orienté en direction de l'espace de travail (210) ou
- en tant que cylindre creux fermant la section transversale de la chambre de travail (200) ou
- en tant qu'ellipsoïde de rotation fermant la section transversale de la chambre de travail (200).

**4.** Elément de volume (20) selon une des revendications 1 à 3, dont la chambre de travail (201) est réalisée de forme tubulaire et présente l'espace de transmission de force (213) et l'espace de travail (211) disposés de manière coaxiale dans son intérieur, lesquels sont séparés l'un de l'autre dans la section transversale par l'élément de séparation réalisé en tant que tuyau de séparation (234), dans lequel le tuyau de séparation (234) est réalisé de manière élastique, et dans lequel les chambres caloporteuses (111, 121) sont disposées à la périphérie de la chambre de travail (201) et une entrée ou une sortie est à chaque fois prévue sur les côtés frontaux de la chambre de travail (201) en tant que connexion entre les chambres caloporteuses (111, 121) et l'espace de travail (211), et au moins une entrée ou une sortie est réalisée avec un dispositif (220) pour l'influence de la traversée des chambres caloporteuses (111, 121) avec du fluide actif (102) de telle sorte qu'une traversée d'au moins une des chambres caloporteuses (111, 121) est empêchée ainsi qu'une traversée d'au moins une autre chambre caloporteuse (111, 121) est favorisée.

**5.** Elément de volume (20) selon la revendication 4, dans lequel un dispositif (142) pour favoriser la traversée est prévu à au moins une extrémité de la chambre de travail (201).

**6.** Dispositif (1) pour la conversion d'énergie thermique, mécanique et interne les unes en les autres, présentant au moins deux éléments de volume (10a, 10b, 20a, 20b) selon une des revendications 1 à 5 ainsi qu'au moins un agencement (300) pour la transformation d'énergie cinétique d'un fluide en énergie mécanique, dans lequel

- au moins un caloporteur basse température (112, 113) est disposé au sein d'une première chambre caloporteuse (110, 111) pour le refroidissement du fluide actif et au moins un caloporteur haute température (122, 123) est disposé au sein d'une seconde chambre caloporteuse (120, 121) pour le réchauffage du fluide actif (102), et
- les éléments de volume (10a, 10b, 20a, 20b) sont connectés les uns aux autres par voie hydraulique dans des régions des espaces de transmission de force (212, 213) sollicités par le fluide de refoulement par le biais d'une conduite de connexion (321), dans lequel l'agencement (300) pour la transformation de l'énergie cinétique du fluide est réalisé au sein de la conduite de connexion (321).

**7.** Dispositif (1) selon la revendication 6, dans lequel au moins une des chambres caloporteuses (110, 111, 120, 121) est divisée en chambres secondaires, dans lequel un caloporteur basse température (112, 113) ou un caloporteur haute température (122, 123) est disposé en conséquence dans chaque chambre secondaire et les chambres secondaires sont connectées les unes aux autres par voie fluidique.

**8.** Dispositif (1) selon la revendication 7, dans lequel un dispositif (220) pour empêcher une traversée ou un dispositif (142) pour favoriser la traversée est réalisé au niveau d'une ouverture réalisée entre deux chambres secondaires.

**9.** Dispositif (1) selon une des revendications 6 à 8, dans lequel au moins une des chambres caloporteuses (110, 111, 120, 121) est réalisée avec un volume interne variable.

**10.** Dispositif (1) selon la revendication 6, dans lequel la chambre caloporteuse (110, 111, 120, 121) est réalisée

- à partir d'au moins deux chambres secondaires pouvant être fermées l'une vers l'autre et/ou
- avec un piston étanche au fluide et mobile par rapport à la paroi de la chambre caloporteuse (110, 111, 120, 121) et/ou
- remplie avec un fluide au niveau variable.

**11.** Dispositif (1) selon une des revendications 6 à 10, dans lequel l'agencement (300) pour la transformation d'énergie fluidique est réalisé à partir d'au moins un moteur fluidique à action rotative ou à partir d'au moins un moteur linéaire, et l'agencement (300) pour la transformation d'énergie fluidique présente un agencement de vannes (320).

**12.** Dispositif (1) selon une des revendications 6 à 11, dans lequel les éléments de volume (10a, 10b, 20a, 20b) sont connectés les uns aux autres par voie hydraulique dans des régions des espaces de transmission de force (212, 213) sollicités par le fluide de refoulement (202) par le biais d'une conduite de dérivation (240), dans lequel la conduite de dérivation (240) présente une vanne (250) pour l'ouverture et la fermeture de la section transversale d'écoulement.

**13.** Procédé d'exploitation du dispositif (1) selon une des revendications 6 à 12, présentant les étapes suivantes :

a) refroidissement d'un fluide actif gazeux au sein d'une première chambre caloporteuse (110, 111) et réchauffage du fluide actif gazeux au sein d'une seconde chambre caloporteuse (120, 121) à chaque fois d'un premier élément de volume (10a, 20a) et d'un second élément de volume (10b, 20b), dans lequel un dispositif (220) est à chaque fois réglé pour l'influence de la traversée des chambres caloporteuses (110, 111) de telle sorte que

- le fluide actif circule et est réchauffé dans le premier élément de volume (10a, 20a) entre la seconde chambre caloporteuse (120, 121) et un espace de travail (210, 211), dans lequel la pression du fluide actif (102) est augmentée en cas de volume interne constant, ainsi que
- le fluide actif (102) circule et est refroidi dans le second élément de volume (10b, 20b) entre la première chambre caloporteuse (110, 111) et un espace de travail (210, 211), dans lequel la pression du fluide actif (102) est réduite en cas de volume interne constant, et
- réalisation d'une différence de pression entre les fluides actifs (102) inclus au sein des éléments de volume (10a, 10b, 20a, 20b),

b) ouverture d'une conduite de connexion (321) et connexion d'espaces de transmission de force (212, 213) des éléments de volume (10a, 10b, 20a, 20b) sollicités par un fluide de refoulement (202),

c) expansion du fluide actif (102) au sein du premier élément de volume (10a, 20a) ainsi que compression du fluide actif (102) au sein du second élément de volume (10b, 20b), dans lequel

- le fluide de refoulement (202) déborde de l'espace de transmission de force (212, 213) du premier élément de volume (10a, 20a) dans l'espace de transmission de force (212, 213) du second élément de volume (10b, 20b), ainsi que
- un agencement (300) réalisé dans la conduite de connexion (321) est sollicité et entraîné pour la transformation de l'énergie fluidique du fluide de refoulement (202),

jusqu'à ce que les fluides actifs (102) inclus au sein des éléments de volume (10a, 10b, 20a, 20b) présentent une pression identique,
d) réglage des dispositifs (220, 221) pour l'influence de la traversée des chambres caloporteuses (110, 111) de telle sorte que

- le fluide actif (102) circule et est refroidi dans le premier élément de volume (10a, 20a) entre la première chambre caloporteuse (110, 111) et l'espace de travail (210, 211), dans lequel la pression du fluide actif (102) est réduite en cas de volume interne constant, ainsi que
- le fluide actif (102) circule et est réchauffé dans le second élément de volume (10b) entre la seconde chambre caloporteuse (120, 121) et l'espace de travail (210, 211), dans lequel la pression du fluide actif (102) est augmentée en cas de volume interne constant, et
- réalisation d'une différence de pression entre les fluides actifs (102) inclus au sein des éléments de volume (10a, 10b, 20a, 20b),

e) ouverture de la conduite de connexion (321) et connexion des espaces de transmission de force (212, 213) des éléments de volume (10a, 10b, 20a, 20b) sollicités par le fluide de refoulement (202),
f) expansion du fluide actif (102) au sein du second élément de volume (10b, 20b) ainsi que compression du fluide actif (102) au sein du premier élément de volume (10a, 20a), dans lequel

- le fluide de refoulement (202) déborde de l'espace de transmission de force (212, 213) du second élément de volume (10b, 20b) dans l'espace de transmission de force (212, 213) du second élément de volume (10a, 20a), ainsi que
- l'agencement (300) réalisé dans la conduite de connexion (321) est sollicité et entraîné pour la transformation de l'énergie fluidique du fluide de refoulement (202),

jusqu'à ce que les fluides actifs (102) inclus au sein des éléments de volume (10a, 10b, 20a, 20b) présentent une pression identique ;
dans lequel l'énergie cinétique du fluide de refoulement (202) est convertie en énergie mécanique.

14. Procédé selon la revendication 13, dans lequel le fluide actif (102) pour le refroidissement s'écoule au sein de la première chambre caloporteuse (110, 111) par le biais d'au moins un caloporteur basse température (112, 113) qui est sollicité par un premier caloporteur, et que le fluide actif (102) pour le réchauffage s'écoule au sein de la seconde chambre caloporteuse (120, 121) par le biais d'au moins un caloporteur haute température (122, 123) qui est sollicité par un second caloporteur.

15. Procédé selon la revendication 13 ou 14, dans lequel la conduite de connexion (321) est fermée à la suite des étapes de procédé c) et/ou f) et une conduite de dérivation (240) pour la connexion des espaces de transmission de force (212, 213) des éléments de volume (10a, 10b, 20a, 20b) sollicités par le fluide de refoulement (202) est ouverte pour l'équilibrage de la pression au sein des éléments de volume (10a, 10b, 20a, 20b), laquelle est fermée après l'équilibrage de la pression.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14a

Fig. 14b

22,201

20a,20b

123

111

121

113

111

220

A - A

Fig. 15a

213  211  22

20a,20b

102

234  234'

B - B

202  321

Fig. 15b

20a,20b

C - C

142

Fig. 15c

Fig. 16a

Fig. 16b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8938942 B2
- EP 2775109 A1
- US 20060059912 A
- AT 506796
- DE 102010005232